# EUROPEAN PATENT SPECIFICATION

(11) **EP 4 216 628 B1**
(45) Date of publication and mention of the grant of the patent: **26.11.2025**
(21) Application number: 20954513.6
(22) Date of filing: 24.09.2020
(51) Int. Cl.: H04W 72/02, H04L 5/00

(54) **WIRELESS COMMUNICATION METHOD, TERMINAL DEVICE AND NETWORK DEVICE**
DRAHTLOSKOMMUNIKATIONSVERFAHREN, ENDGERÄTEVORRICHTUNG UND NETZWERKVORRICHTUNG
PROCÉDÉ DE COMMUNICATION SANS FIL, DISPOSITIF DE TERMINAL ET DISPOSITIF DE RÉSEAU

(43) Date of publication of application: 26.07.2023
(73) Proprietor: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Taor, Simon Edward William
(86) International application number: PCT/CN2020/117491
(87) International publication number: WO 2022/061661

(56) References cited:
- WO-A1-2019/216729
- US-A1- 2020 137 695
- MODERATOR (OPPO): "Summary#1 on UCI enhancements for R16 URLLC", vol. RAN WG1, no. e-Meeting; 20200817 - 20200828, 13 August 2020 (2020-08-13), XP052348340, Retrieved from the Internet <URL:https://ftp.3gpp.org/tsg_ran/WG1_RL1/TSGR1_102-e/Docs/R1-2006971.zip R1-2006971.doc> [retrieved on 20200813]
- CATT: "Remaining issues on UCI enhancements", vol. RAN WG1, no. e-Meeting; 20200817 - 20200828, 8 August 2020 (2020-08-08), XP052347046, Retrieved from the Internet <URL:https://ftp.3gpp.org/tsg_ran/WG1_RL1/TSGR1_102-e/Docs/R1-2005673.zip R1-2005673.docx> [retrieved on 20200808]
- OPPO: "Remaining issues on HARQ enhancements for NR-U", 3GPP DRAFT; R1-2000472, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20200224 - 20200228, 15 February 2020 (2020-02-15), Mobile Competence Centre ; 650, route des Lucioles ; F-06921 Sophia-Antipolis Cedex ; France , XP051853323
- VIVO: "Remaining issues on HARQ operation for NR-U", 3GPP DRAFT; R1-2000311, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200224 - 20200306, 14 February 2020 (2020-02-14), Mobile Competence Centre ; 650, route des Lucioles ; F-06921 Sophia-Antipolis Cedex ; France , XP051852800
- "3rd Generation Partnership Project; Technical Specification Group Radio Access Network; Solutions for NR to support non-terrestrial networks (NTN) (Release 16)", 3GPP STANDARD; TECHNICAL REPORT; 3GPP TR 38.821, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V1.0.0, 2 December 2019 (2019-12-02), Mobile Competence Centre ; 650, route des Lucioles ; F-06921 Sophia-Antipolis Cedex ; France , pages 1 - 143, XP051840691
- HUAWEI, HISILICON: "Summary of MAC remaining issues for eURLLC", 3GPP DRAFT; R2-2004147, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20200420 - 20200430, 1 May 2020 (2020-05-01), Mobile Competence Centre ; 650, route des Lucioles ; F-06921 Sophia-Antipolis Cedex ; France , XP051879384

## Description

### Technical Field

Embodiments of the present application relate to the field of communications, and more particularly to a wireless communication method, a terminal device, and a network device.

### Background

In a Non-Terrestrial Networks (NTN) system, for downlink data transmission of a terminal device, a network device may indicate the terminal device to disable Hybrid Automatic Repeat Request Acknowledge (HARQ-ACK) feedback of one or more downlink Hybrid Automatic Repeat ReQuest (HARQ) processes. In this case, if the terminal device is configured with Type-1 or Type-2 or eType-2 HARQ-ACK codebook feedback, when the terminal device is supposed to transmit the HARQ-ACK information corresponding to the downlink data transmission on a first Physical Uplink Control Channel (PUCCH) resource, if the first PUCCH resource and the first Physical Uplink Shared Channel (PUSCH) resource of the terminal device overlap at least partially in a time domain, how to determine whether to multiplex HARQ-ACK information corresponding to the downlink data transmission on the first PUCCH resource or how to determine a size of the included HARQ-ACK information is an urgent problem to be solved.

Document R1-2006971 (Moderator (OPPO): "Summary#1 on UCI enhancements for R16 URLLC") discusses some aspects about multiple PUCCHs for HARQ-ACK with alsot for a service type, different HARQ-ACK codebook constructions, corrections and clarifications related to new DCI formats, etc.

Document R1-2005673 (CATT: "Remaining issues on UCI enhancements") discusses the remaining issues for UL control enhancements for URLLC.

Document WO2019/216729 A1 discloses a method for multiplexing uplink control information in wireless communication system, and an apparatus using same. A base station comprises a processor which receives DCI of a physical downlink control channel (PDCCH) for scheduling a physical uplink shared channel (PUSCH) transmission over a plurality of slots and multiplexes hybrid automatic repeat request (HARQ)-ACK information to the PUSCH information by applying a value in a downlink assignment index (DAI) field of the DCI to each slot where the HARQ-ACK information is multiplexed to the PUSCH transmission over the plurality of slots.

### Summary

The scope of the invention is defined by the appended claims.

### Brief Description of Drawings

FIG. 1A-1C are schematic diagrams of application scenarios according to an embodiment of the present application.
FIG. 2 is a schematic diagram of a relationship between the number of HARQ processes and RTT.
FIG. 3 is a schematic diagram of a wireless communication method according to an embodiment of the present application.
FIG. 4 is a schematic block diagram of a terminal device according to an embodiment of the present application.
FIG. 5 is a schematic block diagram of a network device according to an embodiment of the present application.
FIG. 6 is a schematic block diagram of a communication device according to another embodiment of the present application.
FIG. 7 is a schematic block diagram of a chip according to an embodiment of the present application.
FIG. 8 is a schematic block diagram of a communication system according to an embodiment of the present application.

### Detailed Description

Technical solutions in embodiments of the present application will be described below with reference to the drawings in the embodiments of the present application. It is apparent that the embodiments described are just some of the embodiments of the present application, but not all of the embodiments of the present application. With regard to the embodiments of the present application, all other embodiments obtained by a person of ordinary skill in the art without making an inventive effort are within the protection scope of the present application.

Technical solutions according to embodiments of the present application may be applied to various communication systems, such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution system of the NR system, an LTE-based access to unlicensed spectrum (LTE-U) system, an NR-based access to unlicensed spectrum (NR-U) system, a Non-Terrestrial Networks (NTN) system, a Universal Mobile Telecommunications System (UMTS), Wireless Local Area Networks (WLAN), Wireless Fidelity (WiFi), a 5th-generation (5G) communication system, or another communication system, etc.

Generally, traditional communication systems support a limited quantity of connections, and are easy to implement. However, with the development of communication technology, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc., and the embodiments of the present application may be applied to these communication systems as well.

Optionally, the communication system in the embodiment of the present application may be applied to a carrier aggregation (CA) scenario, or a dual connectivity (DC) scenario, or a standalone (SA) networking scenario.

Optionally, the communication system in an embodiment of the present application may be applied to an unlicensed spectrum, wherein the unlicensed spectrum may also be considered as a shared spectrum; or, the communication system in the embodiment of the present application may also be applied to a licensed spectrum, wherein the licensed spectrum may also be considered as a non-shared spectrum.

Optionally, an embodiment of the present application may be applied to a Non-Terrestrial Networks (NTN) system or to a Terrestrial Networks (TN) system.

Various embodiments of the present application are described in combination with the network device and the terminal device. The terminal device may also be referred to as a User Equipment (UE), an access terminal, a subscriber unit, a subscriber station, a mobile station, a mobile platform, a remote station, a remote terminal, a mobile device, a user terminal, a terminal, a wireless communication device, a user agent or a user apparatus, etc.

The terminal device may be a station (ST) in a WLAN, or may be a cellular phone, a cordless phone, a Session Initiation Protocol (SIP) phone, a Wireless Local Loop (WLL) station, a Personal Digital Assistant (PDA) device, a handheld device with a wireless communication function, a computing device, or other processing devices connected to a wireless modem, a vehicle-mounted device, a wearable device, and a terminal device in a next generation communication system, such as an NR network, or a terminal device in a future evolved Public Land Mobile Network (PLMN).

In an embodiment of the present application, a terminal device may be deployed on land including indoor or outdoor, handheld, wearable or mounted on vehicle; or it may be deployed on water (such as on ships, etc.); or it may be deployed aerially (such as in airplanes, balloons and satellites, etc.).

In an embodiment of the present application, the terminal device may be a mobile phone, a Pad, a computer with wireless transceiving function, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc. The terminal device related to embodiments of the present application may also be referred to a terminal, a User Equipment (UE), an access terminal device, a vehicle-mounted terminal, an industrial control terminal, a UE unit, a UE station, a mobile station, a mobile platform, a remote station, a remote terminal device, a mobile device, a UE terminal device, a wireless communication device, a UE agent, or a UE apparatus, etc. The terminal device may also be fixed or mobile.

As an example rather than limitation, in the embodiments of the present application, the terminal device may be a wearable device. The wearable device may also be referred to as a wearable smart device, which is a general term of wearable devices developed by intelligent design on daily wear by applying wearable technology, such as glasses, gloves, a watch, clothing and shoes. The wearable device is a portable device that is worn directly on a body, or integrated into clothes or accessories of users. The wearable device not only is a hardware device, but also implements powerful functions through software support as well as data interaction or cloud interaction. Generalized wearable smart devices include devices such as a smart watch or smart glasses, which have fully functions, large sizes, and may implement complete or partial functions without relying on smart phones, and devices such as various smart bracelets, smart jewelries or the like for monitoring physical signs, which focus on a certain kind of application functions only and need to be used in conjunction with other devices such as smart phones.

In an embodiment of the present application, the network device may be a device used for communicating with a mobile device, and may be an Access Point (AP) in the WLAN, a Base Transceiver Station (BTS) in GSM or CDMA, a NodeB (NB) in WCDMA, an evolutional Node B (eNB or eNodeB) in LTE, a relay station or an access point, a vehicle-mounted device, a wearable device, a network device (gNB) in the NR network, a network device in a future evolved PLMN network, or a network device in an NTN network, etc.

As an example rather than limitation, in an embodiment of present application, the network device may be of mobility, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may be a base station disposed in a position on land or a water region etc.

In an embodiment of the present application, the network device may provide a service for a cell, and the terminal device communicates with the network device through a transmission resource (e.g., a frequency domain resource, which is also referred to as a spectrum resource) used by the cell, wherein the cell may be a cell corresponding to the network device (e.g., a base station), and the cell may belong to a macro base station, or may belong to a base station corresponding to a Small cell. The Small cell herein may include a Metro cell, a Micro cell, a Pico cell, or a Femto cell, etc. The Small cells are characterized by a small coverage range and a low transmission power, and are suitable for providing high-speed data transmission services.

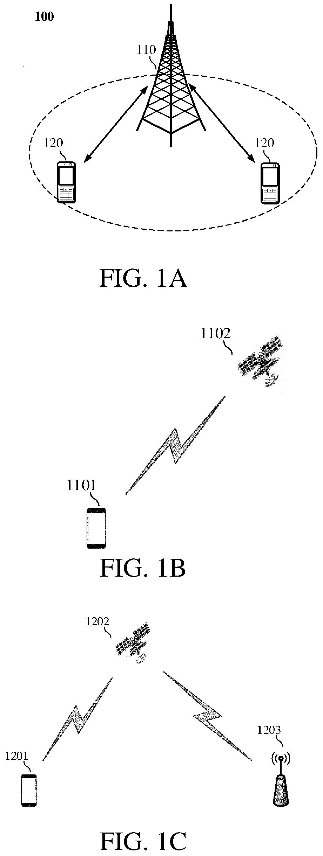

Illustratively, FIG. 1A is a schematic diagram of architecture of a communication system according to an embodiment of the present application. As shown in FIG. 1A, the communication system 100 may include a network device 110, which may be a device that communicates with a terminal device 120 (or referred to as a communication terminal, a terminal). The network device 110 may provide communication coverage for a specific geographical area, and may communicate with terminal devices located within the coverage area.

FIG. 1A illustrates exemplarily one network device and two terminal devices. Optionally, the communication system 100 may include multiple network devices, and another quantity of terminal devices may be included within the coverage area of each network device, which is not limited in the embodiments of the present application.

Illustratively, FIG. 1B is a schematic diagram of architecture of another communication system according to an embodiment of the present application. Referring to FIG. 1B, the communication system includes a terminal device 1101 and a satellite 1102, and a wireless communication may be performed between the terminal device 1101 and the satellite 1102. A network formed between the terminal device 1101 and the satellite 1102 may also be referred to as an NTN. In the architecture of the communication system shown in FIG. 1B, the satellite 1102 may have a function of a base station, and direct communication may be performed between the terminal device 1101 and the satellite 1102. Under the system architecture, the satellite 1102 may be called a network device. Optionally, the communication system may include multiple network devices, and a coverage area of each network device may include another quantity of terminal devices, which is not limited in the embodiments of the present application.

Illustratively, FIG. 1C is a schematic diagram of architecture of another communication system according to an embodiment of the present application. Referring to FIG. 1C, the communication system includes a terminal device 1201, a satellite 1202, and a base station 1203, a wireless communication may be performed between the terminal device 1201 and the satellite 1202, and a communication may be performed between the satellite 1202 and the base station 1203. A network formed between the terminal device 1201, the satellite 1202 and the base station 1203 may also be referred to as an NTN. In the architecture of the communication system shown in FIG. 1C, the satellite 1202 may not have a function of a base station, and the communication between the terminal device 1201 and the base station 1203 requires a transit through the satellite 1202. Under this system architecture, the base station 1203 may be referred to as a network device. Optionally, the communication system may include multiple network devices 1203, and a coverage area of each network device 1203 may include another quantity of terminal devices, which is not limited in the embodiments of the present application.

It should be noted that FIGs. 1A-1C are only illustratives of the systems to which the present application applies, and of course, the method shown in the embodiments of the present application may also be applied to other systems, such as a 5G communication system, an LTE communication system, etc, which is not limited in the embodiments of the present application.

Optionally, the wireless communication system illustrated in FIG. 1A-1C may further include other network entities such as a Mobility Management Entity (MME), an Access and Mobility Management Function (AMF), etc.. which is not limited in the embodiments of the present application.

It should be understood that a device with a communication function in a network/system in the embodiments of the present application may also be referred to as a communication device. Taking the communication system 100 shown in FIG. 1A as an example, the communication device may include a network device 110 and terminal devices 120 which have communication functions, and the network device 110 and the terminal devices 120 may be the specific devices described above, which will not be repeated here again. The communication device may also include another device in the communication system 100, for example, another network entity such as a network controller, a mobile management entity, or the like, which is not limited in the embodiments of the present application.

It should be understood that the terms "system" and "network" are often used interchangeably herein. The term "and/or" herein describes an association relationship between associated objects only, indicating that there may be three relationships, for example, A and/or B may indicate three cases: A alone, A and B, and B alone. In addition, the symbol "/" herein generally indicates that there is a "or" relationship between the associated objects before and after "/".

It should be understood that "indication" involved in embodiments of the present application may be a direct indication, may be an indirect indication, or may represent an association relationship. For example, that A indicates B may mean that A indicates B directly, e.g., B may be acquired through A; or it may mean that A indicates B indirectly. e.g., A indicates C and B may be acquired through C; or it may mean that there is an association between A and B.

In the description of the embodiments of the present application, the term "correspond" may mean that there is a directly corresponding or an indirectly corresponding relationship between two parties, or mean that there is an association between two parties, or mean a relationship such as indicating and being indicated, configuring and being configured, etc.

In embodiments of the present application, "predefinition" may be achieved by pre-storing corresponding codes, tables or other means that may be used to indicate relevant information in devices (e.g., including terminal devices and network devices), the specific manner to achieve the "predefinition" is not limited in the present application. For example, the "predefinition" may refer to what is defined in a protocol.

In an embodiment of the present application, the "protocol" may refer to a standard protocol in the communication field, for example, which may include an LTE protocol, an NR protocol, and related protocols applied in future communication systems, which is not limited in the present application.

Optionally, indication information in an embodiment of the present application includes at least one of Downlink Control Information (DCI), Radio Resource Control (RRC) signaling or Media Access Control Control Element (MAC CE).

Optionally, a high-level parameter or high-level signaling in an embodiment of the present application includes at least one of radio resource control (RRC) signaling or a media access control control element (MAC CE).

In order to better understand an embodiment of the present application, firstly, relevant HARQ mechanism and HARQ-ACK feedback mechanism of the present application are explained.

### HARQ Mechanism in an NR System

There are two levels of retransmission mechanism in the NR system: Hybrid Automatic Repeat ReQuest (HARQ) mechanism of Media Access Control (MAC) layer and Automatic Repeat ReQuest (ARQ) mechanism of Radio Link Control (RLC) layer. The retransmission of lost or erroneous data is mainly handled by the HARQ mechanism of the MAC layer and supplemented by retransmission function of the RLC layer. The HARQ mechanism of the MAC layer can provide fast retransmission, and the ARQ mechanism of the RLC layer can provide reliable data transmission.

The HARQ uses a Stop-and-Wait Protocol to transmit data. In the Stop-and-Wait protocol, a transmitting end stops to wait for acknowledgement information after transmitting a transport block (TB) or blocks (TBs) once. In this way, the transmitting end stops to wait for acknowledgement after each transmission, which will lead to low throughput of users. Therefore, the NR uses multiple parallel HARQ processes. When one HARQ process is waiting for acknowledgement information, the transmitting end may use another HARQ process to continue transmitting data. Together, these HARQ processes form one HARQ entity, which combines the stop-and-wait protocol to allow continuous data transmission. HARQ is divided into uplink HARQ and downlink HARQ. The uplink HARQ is for uplink data transmission, and the downlink HARQ is for downlink data transmission. The uplink HARQ and the downlink HARQ are independent of each other.

In some cases, the terminal device has a respective HARQ entity for each serving cell. Each HARQ entity maintains a group of parallel downlink HARQ processes and a group of parallel uplink HARQ processes. As an example, each uplink carrier and each downlink carrier both support up to 16 HARQ processes. A network device may indicate the maximum number of HARQ processes to the terminal device through radio resource control (RRC) signaling semi-static configuration according to a network deployment situation. Optionally, in some embodiments, the default number of HARQ processes of downlink is 8 and the maximum number of HARQ processes supported per carrier of uplink is always 16 if the network device does not provide corresponding configuration parameters. Each HARQ process corresponds to one HARQ process ID. For downlink, a broadcast control channel (BCCH) uses a dedicated broadcast HARQ process. For uplink, Msg3 transmission in a random procedure uses HARQ ID 0.

In some embodiments, for a terminal device that does not support downlink space division multiplexing, each downlink HARQ process can only handle 1 TB at the same time; for a terminal device that supports downlink space division multiplexing, each downlink HARQ process can handle one or two TBs at the same time. Each uplink HARQ process of a terminal device handles 1 TB at the same time.

HARQ is divided into synchronous HARQ and asynchronous HARQ in a time domain, and non-adaptive HARQ and adaptive HARQ in a frequency domain. An asynchronous adaptive HARQ mechanism is used in both uplink and downlink of NR. For the asynchronous HARQ, a time interval between retransmission of the same TB and the last transmission is not fixed. The adaptive HARQ may change frequency domain resources and MCS used in the retransmission.

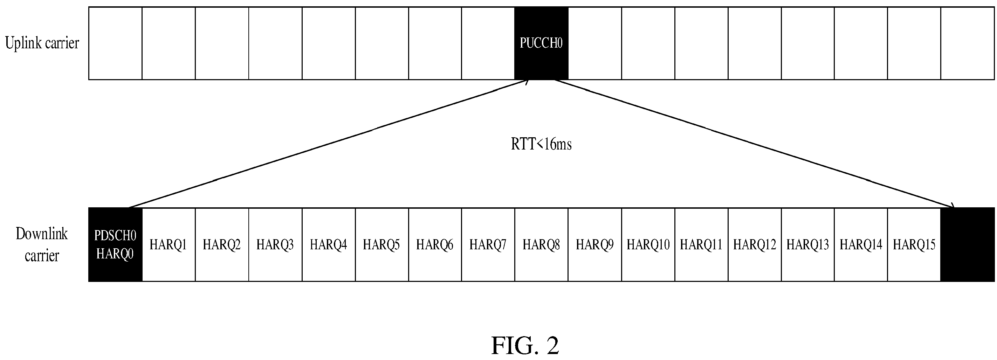

The relationship between the number of supported HARQ processes and the RTT is illustrated by taking downlink transmission as an example in combination with FIG. 2. As shown in FIG. 2, the terminal device is configured with the maximum number of HARQ processes of 16, so the maximum throughput of the terminal device is not affected when the RTT is small, for example less than 16ms, or if the RTT is less than 16ms, the terminal device can always have parallel HARQ processes for data transmission when there is traffic to be transmitted. Of course, if the RTT is large, for example, much larger than 16ms, there may be a situation in which all HARQ processes of the terminal device are used for data transmission and no feedback from the network device is obtained, which leads to a situation in which the terminal device has traffic to be transmitted but no HARQ processes can be used, thus affecting a throughput of data transmission on the terminal device side.

### HARQ-ACK Feedback in an NR System

For a terminal device with downlink service, a network device may schedule transmission of Physical Downlink Shared Channel (PDSCH) for the terminal device through Downlink Control Information (DCI). Herein, the DCI includes indication information of a Physical Uplink Control Channel (PUCCH) resource. After receiving the PDSCH, the terminal device feeds back a decoding result of the PDSCH (Acknowledge (ACK) information or Negative Acknowledge (NACK) information) to the network device through the PUCCH resource. Herein, dynamic determination of HARQ feedback timing is supported in the NR system. The network device schedules the terminal device to perform PDSCH reception through the DCI.The DCI includes indication information for transmitting an uplink feedback resource, such as the PUCCH resource, of the HARQ-ACK corresponding to the PDSCH.

As an example, the indication information may include: PUCCH resource indicator, used for determining a PUCCH resource; HARQ Feedback Timing Indication Information (e.g., PDSCH-to-HARQ_feedback timing indicator), used for dynamically determining a time domain position of an uplink feedback resource, e.g., a time slot of a PUCCH resource for HARQ feedback, typically represented by K1.

Herein, the HARQ feedback timing indication information is used for indicating a value in a HARQ feedback timing set. The HARQ feedback timing set may be preset or configured by the network device. As an example, the HARQ feedback timing indication information includes 3 bits. When the HARQ feedback timing indication information is 000, a first value in the HARQ feedback timing set is indicated; when the HARQ feedback timing indication information is 001, a second value in the HARQ feedback timing set is inicated, and so on.

When the terminal device performs a HARQ-ACK feedback, the HARQ-ACK feedback includes a semi-static codebook feedback, such as type 1 (Type-1) HARQ-ACK codebook feedback, and a dynamic codebook feedback, such as type 2 (Type-2) or enhanced type 2 (eType-2) HARQ-ACK codebook feedback.

If the terminal device is configured with the Type-1 HARQ-ACK codebook feedback, the Type-1 HARQ-ACK codebook includes HARQ-ACK information corresponding to a candidate PDSCH transmission opportunity in a HARQ-ACK feedback window.

If the terminal device is configured with the Type-2 HARQ-ACK codebook feedback, the Type-2 HARQ-ACK codebook includes HARQ-ACK information corresponding to a scheduled PDSCH in a HARQ-ACK feedback window. Herein, a DCI format for scheduling PDSCH includes a Downlink assignment index (DAI) information field: counter DAI (C-DAI) information for determining which downlink transmission in the HARQ feedback window is a downlink transmission currently scheduled by the DCI, herein the C-DAI information is ordered according to an order of detection opportunities of the PDCCH.

In a scenario of a carrier aggregation, the DCI may further include: total DAI (T-DAI) information for determining how many downlink transmissions are included in total in the HARQ feedback window up to the current DCI scheduling.

If the terminal device is configured with the eType-2 HARQ-ACK codebook feedback, the eType-2 HARQ-ACK codebook includes HARQ-ACK information corresponding to the PDSCH scheduled and grouped in a HARQ-ACK feedback window. A base station may group scheduled PDSCHs and indicate grouping information of the PDSCHs through explicit DCI signaling scheduling PDSCH, so that the UE performs corresponding HARQ-ACK feedback according to different groups after receiving the PDSCHs. In other words, the DCI for the base station to schedule the UE to receive the PDSCHs includes indication information of PDSCH group index and indication information of a new feedback indicator (NFI). In this mode, at most two groups may be included, and when the base station triggers the UE to perform the HARQ-ACK feedback, the feedback of one group may be triggered, or the feedback of two groups may be triggered at the same time. Specifically, the DCI information may include an information field of Number of requested PDSCH group(s) for feeding back the number of request groups. If the terminal device receives the DCI information sent by the network device, and the information field of Number of requested PDSCH group(s) in the DCI information is a preset value, for example, 1, then the terminal device needs to perform the HARQ-ACK feedbacks of two groups. Or, if the terminal device receives the DCI information sent by the network device, and the information field of Number of requested PDSCH group(s) in the DCI information is a preset value, for example, 0, the terminal device needs to perform the HARQ-ACK feedback of the currently scheduled group (i.e., the group to which the PDSCH scheduled by the DCI belongs).

The HARQ feedback window may be determined according to the HARQ feedback timing set or the HARQ feedback timing indication information. As standards evolve, the HARQ feedback timing indication information may indicate not only a valid value, but also an invalid value. When indicating an invalid value, the HARQ feedback timing indication information may indicate that a time domain position of an uplink feedback resource for feeding back HARQ-ACK information is temporarily uncertain.

According to the above information, the terminal device may determine a HARQ-ACK feedback codebook corresponding to a downlink transmission, which is for a PUCCH resource for feeding back the HARQ-ACK information, a time slot for feeding back the HARQ-ACK information, or other information.

In an NTN system, because of a long communication distance between a terminal device and a satellite (or a network device), an RTT of signal transmission is very large. In a GEO system, the RTT of signal transmission may be on a level of hundreds of milliseconds, for example, the maximum RTT of signal transmission may be about 600ms. In an LEO system, the RTT of signal transmission may be on a level of tens of milliseconds. Since the RTT of NTN system is much larger than that of terrestrial communication system, the HARQ mechanism in the NR system is no longer suitable for the NTN system.

As an implementation, the network device may configure one or more downlink HARQ processes of the terminal device to be disabled. For a downlink HARQ process configured to be disabled, the network device does not need to receive the HARQ-ACK information fed back by the terminal device for the TB transmitted in the HARQ process, i.e., the HARQ process may be resued for data transmission. Therefore, the network device may use the disabled HARQ process to schedule a plurality of data packets for the terminal device, thereby reducing an impact of RTT.

In an NTN system, for downlink data transmission of a terminal device, a network device may indicate the terminal device to disable HARQ-ACK feedback of one or more downlink HARQ processes. In this case, if the terminal device is configured with Type-1 or Type-2 or eType-2 HARQ-ACK codebook feedback, when the terminal device is supposed to transmit the HARQ-ACK information corresponding to the downlink data transmission on a first PUCCH resource, if the first PUCCH resource and the first PUSCH resource of the terminal device overlap at least partially in a time domain, how to determine whether the HARQ-ACK information corresponding to the downlink data transmission is multiplexed on the first PUSCH or how to determine the number of bits included in the HARQ-ACK information multiplexed on the first PUSCH is an urgent problem to be solved.

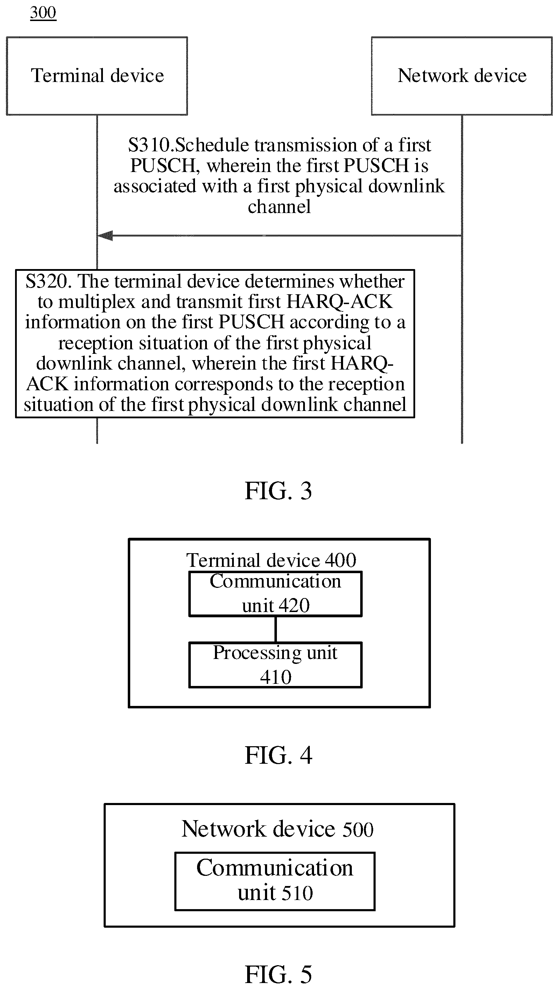

FIG. 3 is a schematic interaction chart of a wireless communication method 300 according to an embodiment of the present application. As shown in FIG. 3, the method 300 may include at least part of the following contents.

In S310, a network device schedules a first PUSCH transmission of a terminal device, and a first physical downlink channel is associated with the first PUSCH.

In S320, the terminal device determines whether to multiplex and transmit first HARQ-ACK information on the first PUSCH according to a reception situation of the first physical downlink channel, wherein, the first HARQ-ACK information corresponds to the reception situation of the first physical downlink channel.

Optionally, in some embodiments, represented as Embodiment One, the first PUSCH transmission may be scheduled by first DCI, and S310 may include: the network device sends the first DCI to the terminal device, wherein the first DCI is used for scheduling the first PUSCH transmission, the first DCI includes first downlink assignment indication (DAI) information, and the first DAI information is used for indicating a number of first physical downlink channels associated with the first PUSCH.

Accordingly, the terminal device receives the first DCI.

Further optionally, S320 may be replaced by the following: the terminal device determines whether to multiplex and transmit the first HARQ-ACK information on the first PUSCH according to the first DAI information and/or the reception situation of the first physical downlink channel, wherein the first HARQ-ACK information corresponds to the reception situation of the first physical downlink channel.

Optionally, in some embodiments, a DCI format corresponding to the first DCI includes at least one of the following: DCI Format 0_1 and DCI Format 0_2, or may be other DCI formats including the DAI information.

Optionally, in some embodiments, denodated as Embodiment Two, the S310 may specifically include: the network device sends scheduling information to the terminal device, wherein the scheduling information is used to determine a transmission of the first PUSCH.

Optionally, the scheduling information does not include DCI, or the scheduling information includes second DCI, and the second DCI does not include the DAI information.

That is, in the Embodiment Two, the first PUSCH may not be scheduled by the DCI, for example, a resource position corresponding to the first PUSCH is semi-statically configured, or may be scheduled by DCI that does not include DAI information.

Combining with the Embodiments One and Two, the first PUSCH may be scheduled by DCI including the DAI information, or by DCI not including the DAI information, or may not be scheduled by DCI.

Optionally, in some embodiments, a DCI format corresponding to the second DCI includes DCI format 0_0, or may be other DCI formats that do not include the DAI information.

Optionally, in some embodiments, represented as Embodiment Three, S310 may include: the network device sends first DCI to the terminal device, the first DCI is used for scheduling the first PUSCH transmission, the first DCI includes first DAI information, the first DAI information is used for indicating whether first HARQ-ACK information is multiplexed and transmitted on the first PUSCH, and a first physical downlink channel is associated with the first PUSCH.

Accordingly, the terminal device receives the first DCI.

Further, S320 may be replaced by the following: the terminal device determines whether to multiplex and transmit the first HARQ-ACK information on the first PUSCH according to the first DAI information and a reception situation of the first physical downlink channel, wherein, the first HARQ-ACK information corresponds to the reception situation of the first physical downlink channel.

Optionally, S320 may be replaced by the following: the terminal device determines whether to multiplex and transmit the first HARQ-ACK information on the first PUSCH according to the first DAI information, wherein, the first HARQ-ACK information corresponds to the reception situation of the first physical downlink channel.

Optionally in the Embodiment Three, the terminal device is configured with Type-1 HARQ-ACK codebook feedback; or, the first DAI information includes 1 bit.

Optionally, in the Embodiment Three, a DCI format corresponding to the first DCI includes at least one of the following: DCI Format 0_1 and DCI Format 0_2, or other DCI formats including DAI information.

In the scheduling mode of the first PUSCH in the Embodiments Two and Three, it may be considered that the number of the first physical downlink channels is not associated with the first DAI, that is, the number of the first physical downlink channels is not associated with the first DAI, which may include: the first PUSCH is not scheduled by DCI or DCI scheduling the first PUSCH does not include DAI information; the first DAI information associated with the first PUSCH includes 1 bit, and the first DAI information is not used to indicate the number of the first physical downlink channels.

It should be understood that embodiments of the present application are not specifically limited to the scheduling mode of the first PUSCH, for example, in some embodiments, S310 may include: the network device sends Configured Grant (CG) information for scheduling the first PUSCH transmission, to the terminal device, wherein the first PUSCH is a configured grant PUSCH. Optionally, the configured grant information may be configured grant configuration information or configured grant activation information.

When the first PUSCH transmission is scheduled based on either case, and when the first PUSCH is associated with the physical downlink channel, whether the HARQ-ACK corresponding to the physical downlink channel associated with the first PUSCH is multiplexed on the first PUSCH, and/or the number of bits included in the HARQ-ACK corresponding to the physical downlink channel multiplexed on the first PUSCH, may be determined according to the mode described in the embodiments of the present application. Hereinafter, the specific implementation of the first physical downlink channel and the multiplexing mode of the HARQ-ACK information corresponding to the first physical downlink channel will be described in detail. It should be understood that unless otherwise specified, the characteristics described below are applicable to any of the scheduling modes of the first PUSCH, such as any of the scheduling modes in Embodiments One to Three.

Optionally, in some embodiments, the first physical downlink channel associated with the first PUSCH may refer to the following: a first PUSCH resource corresponding to the first PUSCH and an uplink HARQ-ACK feedback resource corresponding to the first physical downlink channel overlap at least partially in a time domain. Optionally, the uplink HARQ-ACK feedback resource of the first physical downlink channel may be, for example, the first PUCCH resource.

Hereinafter, combining with specific embodiments, descriptions are made for a specific meaning of the first DAI information in an embodiment of the present application, and/or a specific implementation of the first physical downlink channel, and/or a method of whether the terminal device multiplexes and transmits the first HARQ-ACK information on the first PUSCH, and/or a method of how the terminal device determines a size of the first HARQ-ACK information multiplexed and transmitted on the first PUSCH.

### Implementation one:

The first physical downlink channel includes at least one of: a physical downlink shared channel (PDSCH) associated with a Physical Downlink Control Channel (PDCCH) and a first hybrid automatic request retransmission (HARQ) process, wherein the first HARQ process includes a HARQ process corresponding to a first state; a PDCCH indicating release of a Semi-Persistent Scheduling (SPS) PDSCH; a PDCCH indicating a SCell dormancy state; another PDCCH corresponding to the HARQ-ACK information, in other words a PDCCH associated with HARQ-ACK information.

That is, the first physical downlink channel may include a PDSCH satisfying a specific condition, represented as a first type PDSCH, wherein the first type PDSCH is associated with a PDCCH and transmitted through a HARQ process corresponding to the first state.

Optionally, the first HARQ process includes at least one HARQ process.

Optionally, the PDSCH associated with the PDCCH may include at least one of: a PDSCH scheduled by a PDCCH; an SPS PDSCH scheduled by a PDCCH which is used to activate transmission of the SPS PDSCH.

Optionally, the first physical downlink channel does not include a PDSCH transmission associated with a PDCCH and a second HARQ process, wherein the second HARQ process includes a HARQ process corresponding to a second state.

Optionally, the second HARQ process includes at least one HARQ process.

Optionally, the first physical downlink channel may include at least one of: a first type PDSCH, a PDCCH indicating release of an SPS PDSCH, a PDCCH indicating a SCell dormancy state, or another PDCCH corresponding to HARQ-ACK information, and not include a second type PDSCH, wherein the second type PDSCH is associated with a PDCCH and transmitted through the HARQ process corresponding to the second state.

The HARQ process corresponding to the first state includes at least one of the following: a HARQ process corresponding to an enabled state; a HARQ process not configured with a disabled parameter; a HARQ process corresponding to uplink HARQ-ACK feedback.

That is, the state of the HARQ process is considered as an enabled state, or the PDSCH transmitted through the HARQ process needs to perform the uplink HARQ-ACK feedback.

The HARQ process corresponding to the second state includes at least one of the following: the HARQ process corresponding to a disabled state; the HARQ process configured with a disabled parameter.

It should be understood that the disabled state is called a non-enabled state. Optionally, the disabled parameter is configured by the network device to the terminal device through at least one of RRC signaling, MAC CE, or physical layer signaling, such as the DCI.

Optionally, in Implementation one, the HARQ process corresponding to the second state does not correspond to the uplink HARQ-ACK feedback, that is, HARQ-ACK feedback does not need to be performed.

Optionally, in some embodiments, the network device may configure whether the uplink HARQ-ACK feedback needs to be performed for the HARQ process corresponding to the second state.

For example, the network device may send first indication information to the terminal device, wherein the first indication information is used to indicate whether the uplink HARQ-ACK feedback is performed for the HARQ process corresponding to the second state. Specifically, in the Implementation one, the first indication information indicates that the uplink HARQ-ACK feedback does not need to be performed for the HARQ process corresponding to the second state, and when the terminal device receives the PDSCH transmitted by the HARQ process corresponding to the second state, the terminal device does not need to feed back the HARQ-ACK information corresponding to the PDSCH to the network device.

Optionally, in some embodiments, whether the uplink HARQ-ACK feedback needs to be performed for the HARQ process corresponding to the second statemay be predefined. For example, it is predefined that the uplink HARQ-ACK feedback does not need to be performed for the HARQ process corresponding to the second state.

It should be understood that in embodiments of the present application the number of bits of the first DAI information is not specifically limited.

In some embodiments, the first DAI information is 1 bit, 2 bits, or other bit numbers, etc.

Optionally, in some embodiments, the first DAI information is used to indicate whether the first HARQ-ACK information is multiplexed on the first PUSCH. For example, the first DAI information includes 1 bit, when the 1 bit indicates 1, it is indicated that the first HARQ-ACK information is multiplexed and transmitted on the first PUSCH, and when the 1 bit indicates 0, it is indicated that the first HARQ-ACK information is not multiplexed and transmitted on the first PUSCH.

Optionally, in some embodiments, the first DAI information is used to indicate the number of first physical downlink channels associated with the first PUSCH. When the first physical downlink channel is the case of the Implementation one, the number of the first physical downlink channels indicated by the first DAI information includes the number of at least one of: first type PDSCHs, PDCCHs indicating the release of the SPS PDSCH, PDCCHs indicating the SCell dormancy state, or other PDCCHs corresponding to the HARQ-ACK information. Further optionally, the number of the first physical downlink channels indicated by the first DAI information does not include the number of the second type PDSCHs. Table 1 shows meanings of values of the first DAI information when the first DAI information includes 2 bits and the first physical downlink channel includes the first type PDSCH, the PDCCH indicating the release of the SPS PDSCH and the PDCCH indicating the SCell dormancy state in the Implementation one. Herein, LSB represents Least Significant Bit (LSB) and MSB represents Most Significant Bit (MSB).

**Table 1**

| First DAI information of 2 bits MSB, LSB | Value of first DAI information | X ≥ 1, X represents the number of PDSCHs transmitted by HARQ process with an enabled state and associated with PDCCH, or PDCCHs indicating SPS PDSCH release or PDCCHs indicating SCell dormancy, in a HARQ feedback window (that is, X represents the number of first physical downlink channels) |
|---|---|---|
| 0, 0 | 1 | (X-1) mod 4 + 1 = 1 |
| 0, 1 | 2 | (X-1) mod 4 + 1 = 2 |
| 1, 0 | 3 | (X-1) mod 4 + 1 = 3 |
| 1, 1 | 4 | (X-1) mod 4 + 1 = 4 |

### Implementation two:

The first physical downlink channel includes at least one of: a PDSCH transmission associated a PDCCH and a first HARQ process and a PDSCH transmission associated a PDCCH and a second HARQ process, wherein the first HARQ process includes a HARQ process corresponding to a first state, and the second HARQ process includes a HARQ process corresponding to a second state; a PDCCH indicating release of a Semi-Persistent Scheduling (SPS) PDSCH; a PDCCH indicating a SCell dormancy state; another PDCCH corresponding to HARQ-ACK information, in other words, a PDCCH associated with the HARQ-ACK information.

That is, in the Implementation two, different from the Implementation one, the first physical downlink channel may include a PDSCH transmission associated with a PDCCH and a second HARQ process, wherein the second HARQ process includes a HARQ process corresponding to a second state. In other words, the first physical downlink channel includes a second type PDSCH.

Optionally, the first physical downlink channel includes at least one of: a first type PDSCH, a second type PDSCH, a PDCCH indicating release of an SPS PDSCH, a PDCCH indicating a SCell dormancy state, or another PDCCH corresponding to the HARQ-ACK information.

Optionally, in the Implementation two, the HARQ process corresponding to the second state corresponds to an uplink HARQ-ACK feedback.

Optionally, in some embodiments, the network device may configure whether the uplink HARQ-ACK feedback needs to be performed for the HARQ process corresponding to the second state.

For example, the network device may send first indication information to the terminal device, wherein the first indication information is used to indicate whether the uplink HARQ-ACK feedback is performed for the HARQ process corresponding to the second state. Specifically, in the Implementation two, the first indication information indicates that the uplink HARQ-ACK feedback needs to be performed for the HARQ process corresponding to the second state, and when the terminal device receives a PDSCH transmitted by the HARQ process corresponding to the second state, the HARQ-ACK information corresponding to the PDSCH needs to be fed back to the network device.

Optionally, in some embodiments, whether the uplink HARQ-ACK feedback needs to be performed for the HARQ process corresponding to the second state may be predefined. For example, it is predefined that the uplink HARQ-ACK feedback needs to be performed for the HARQ process corresponding to the second state.

Optionally, in some embodiments, the first DAI information is used to indicate whether the first HARQ-ACK information is multiplexed and transmitted on the first PUSCH. For example, the first DAI information includes 1 bit, when the bit indicates 1, it is indicated that the first HARQ-ACK information is multiplexed and transmitted on the first PUSCH; when the bit indicates 0, it is indicated that the first HARQ-ACK information is not multiplexed and transmitted on the first PUSCH.

Optionally, in some embodiments, the first DAI information is used to indicate the number of first physical downlink channels associated with the first PUSCH, when the first physical downlink channel is the case of the Implementation two, the number of the first physical downlink channels indicated by the first DAI information includes the number of at least one of first type PDSCHs, second type PDSCHs, PDCCHs indicating the release of the SPS PDSCH, PDCCHs indicating the SCell dormancy state, or other PDCCHs corresponding to the HARQ-ACK information.

Table 2 shows meanings of values of the first DAI information when the first DAI information includes 2 bits and the first physical downlink channel includes the first type PDSCH, the second type PDSCH, the PDCCH indicating the release of the SPS PDSCH and the PDCCH indicating the SCell dormancy state in the Implementation two.

**Table 2**

| First DAI information MSB, LSB | Value of DAI information | X ≥ 1, X represents the number of PDSCHs transmitted by HARQ processes with enabled and disenabled states and associated with PDCCH or PDCCHs indicating SPS PDSCH release or PDCCHs indicating SCell dormancy, in a HARQ feedback window |
|---|---|---|
| 0, 0 | 1. | (X-1) mod 4 + 1 = 1 |
| 0, 1 | 2. | (X-1) mod 4 + 1 = 2 |
| 1, 0 | 3. | (X-1) mod 4 + 1 = 3 |
| 1, 1 | 4. | (X-1) mod 4 + 1 = 4 |

Optionally, in some embodiments of the present application, the terminal device may determine the meaning of the first DAI information according to the first indication information of the network device, wherein the first indication information is used to indicate whether the uplink HARQ-ACK feedback is performed for the HARQ process corresponding to the second state. Or, the terminal device may determine whether the uplink HARQ-ACK feedback is performed for the HARQ process corresponding to the second state according to the first indication information of the network device, wherein, the first indication information is used to indicate the meaning of the first DAI information.

For example, if the first indication information indicates that the uplink HARQ-ACK feedback does not need to be performed for the HARQ process corresponding to the second state, the meaning of the first DAI information may be the case in the Implementation one. In this case, the terminal device may not feed back the HARQ feedback information corresponding to the PDSCH transmitted through the HARQ process of the second state to the network device. That is, only the HARQ feedback information corresponding to the PDSCH transmitted through the HARQ process of the first state is fed back to the network device.

For another example, if the first indication information indicates that the uplink HARQ-ACK feedback needs to be performed for the HARQ process corresponding to the second state, the meaning of the first DAI information may be the case in the Implementation two. In this case, the terminal device may feed back the HARQ feedback information corresponding to the PDSCH transmitted through the HARQ process of the second state to the network device. That is, the HARQ feedback information corresponding to PDSCHs transmitted through HARQ processes of the first state and the second state is fed back to the network device.

Hereinafter, how to determine whether the first HARQ-ACK information corresponding to the first physical downlink channel is multiplexed and transmitted on the first PUSCH, or how to determine the number of bits included in the first HARQ-ACK information multiplexed on the first PUSCH, based on the implementations one and two described above, will be described.

In some embodiments of the present application, the terminal device may determine whether to multiplex and transmit the first HARQ-ACK information corresponding to the first physical downlink channel on the first PUSCH according to at least one of: the first DAI information, the reception situation of the first physical downlink channel, or a feedback rule.

Optionally, the feedback rule includes whether the terminal device needs to multiplex and transmit the HARQ-ACK information corresponding to the SPS PDSCH on the first PUSCH.

Optionally, the feedback rule includes the first indication information.

Optionally, in some embodiments, if the number of the first physical downlink channels received by the terminal device is greater than or equal to 1, or the terminal device needs to multiplex and transmit the HARQ-ACK information corresponding to the SPS PDSCH on the first PUSCH, then the terminal device multiplexes and transmits the first HARQ-ACK information on the first PUSCH.

As an example rather than limitation, the first physical downlink channel includes a first type PDSCH, a PDCCH indicating release of an SPS PDSCH and a PDCCH indicating a secondary cell dormancy state. If the total number of the first physical downlink channels associated with the first PUSCH received by the terminal device is greater than or equal to 1, or the terminal device needs to multiplex and transmit the HARQ-ACK information corresponding to the SPS PDSCH on the first PUSCH, then the terminal device multiplexes and transmits the first HARQ-ACK information on the first PUSCH.

As an example rather than limitation, the first physical downlink channel includes a first type PDSCH, a second type PDSCH, a PDCCH indicating release of an SPS PDSCH and a PDCCH indicating a secondary cell dormancy state. If the total number of the first physical downlink channels associated with the first PUSCH received by the terminal device is greater than or equal to 1, or the terminal device needs to multiplex and transmit the HARQ-ACK information corresponding to the SPS PDSCH on the first PUSCH, the terminal device multiplexes and transmits the first HARQ-ACK information on the first PUSCH.

Optionally, in some other embodiments, if the terminal device does not receive the first physical downlink channel, and the terminal device does not need to multiplex and transmit the HARQ-ACK information corresponding to the SPS PDSCH on the first PUSCH, and the first DAI information indicates a preset value, then the terminal device does not multiplex and transmit the first HARQ-ACK information on the first PUSCH. Optionally, this situation may be applied to the scheduling mode of the first PUSCH in the embodiment one.

Optionally, the preset value may be, for example, 4, etc., which is not limited in the present application.

As an example rather than limitation, the first physical downlink channel includes a first type PDSCH, a PDCCH indicating release of an SPS PDSCH and a PDCCH indicating a secondary cell dormancy state. If the total number of the first physical downlink channels associated with the first PUSCH received by the terminal device is 0 (or the terminal device does not receive any one of the first physical downlink channels), and the terminal device does not need to multiplex and transmit the HARQ-ACK information corresponding to the SPS PDSCH on the first PUSCH, and the value indicated by the first DAI information is 4, then the terminal device does not multiplex and transmit the first HARQ-ACK information on the first PUSCH.

As an example rather than limitation, the first physical downlink channel includes a first type PDSCH, a second type PDSCH, a PDCCH indicating release of an SPS PDSCH and a PDCCH indicating a secondary cell dormancy state. If the total number of the first physical downlink channels associated with the first PUSCH received by the terminal device is 0 (or the terminal device does not receive any one of the first physical downlink channels), and the terminal device does not need to multiplex and transmit the HARQ-ACK information corresponding to the SPS PDSCH on the first PUSCH, and the value indicated by the first DAI information is 4, then the terminal device does not multiplex and transmit the first HARQ-ACK information on the first PUSCH.

Optionally, in some embodiments, if the terminal device does not receive the first physical downlink channel and the terminal device needs to multiplex and transmit the HARQ-ACK information corresponding to the SPS PDSCH on the first PUSCH, then the terminal device multiplexes and transmits the first HARQ-ACK information on the first PUSCH, and the first HARQ-ACK information includes the HARQ-ACK information corresponding to the SPS PDSCH.

Optionally, in some embodiments, if the terminal device does not receive the first physical downlink channel and the terminal device does not need to multiplex and transmit the HARQ-ACK information corresponding to the SPS PDSCH on the first PUSCH, the terminal device does not multiplex and transmit the first HARQ-ACK information on the first PUSCH. Optionally, the first PUSCH is not associated with the first DAI information. For example, the first PUSCH is not scheduled by DCI or DCI scheduling the first PUSCH does not include the DAI information. Optionally, the first DAI information associated with the first PUSCH is not used to indicate the number of first physical downlink channels, for example, the first DAI information includes 1 bit.

As an example rather than limitation, the first physical downlink channel includes a first type PDSCH, a PDCCH indicating release of an SPS PDSCH and a PDCCH indicating a Scell dormancy state. If the total number of the first physical downlink channels associated with the first PUSCH received by the terminal device is 0 (or the terminal device does not receive any one first physical downlink channel), and the terminal device does not need to multiplex and transmit the HARQ-ACK information corresponding to the SPS PDSCH on the first PUSCH, then the terminal device does not multiplex and transmit the first HARQ-ACK information on the first PUSCH.

As an example rather than limitation, the first physical downlink channel includes a first type PDSCH, a second type PDSCH, a PDCCH indicating release of an SPS PDSCH and a PDCCH indicating a Scell dormancy state. If the total number of the first physical downlink channels associated with the first PUSCH received by the terminal device is 0 (or the terminal device does not receive any one first physical downlink channel), and the terminal device does not need to multiplex and transmit the HARQ-ACK information corresponding to the SPS PDSCH on the first PUSCH, then the terminal device does not multiplex and transmit the first HARQ-ACK information on the first PUSCH.

Optionally, in some embodiments, the first DAI information is used to indicate whether the first HARQ-ACK information is multiplexed on the first PUSCH. If the first DAI information associated with the first PUSCH received by the terminal device indicates a preset value, such as 1, then the terminal device multiplexes and transmits the first HARQ-ACK information on the first PUSCH. Or, if the first DAI information associated with the first PUSCH received by the terminal device indicates another preset value, such as 0, then the terminal device does not multiplex and transmit the first HARQ-ACK information on the first PUSCH. Or, if the first DAI information associated with the first PUSCH received by the terminal device indicates another preset value, such as 0, and the terminal device only receives a first physical downlink channel, then the terminal device multiplexes and transmits the first HARQ-ACK information on the first PUSCH. Optionally, the first DAI information associated with the first PUSCH is not used to indicate the number of first physical downlink channels, e.g., the first DAI information includes 1 bit. Optionally, the terminal device is configured with Type-1 codebook feedback.

It should be understood that in some embodiments of the present application, since the first HARQ-ACK information includes HARQ-ACK information reflecting the reception situation of the first physical downlink channel, when the terminal device does not receive the first physical downlink channel and the terminal device does not need to multiplex and transmit the HARQ-ACK information corresponding to the SPS PDSCH, the terminal device does not need to multiplex the first HARQ-ACK information on the first PUSCH.

Optionally, in some embodiments, if the first indication information indicates that the uplink HARQ-ACK feedback does not need to be performed for the HARQ process corresponding to the second state, such as a disabled state, the terminal device does not multiplex the HARQ-ACK information corresponding to the PDSCH of the HARQ process corresponding to the second state on the first PUSCH, or the first HARQ-ACK information does not include the HARQ-ACK information corresponding to the PDSCH of the HARQ process corresponding to the second state.

It should be noted that, for the case in the Implementation one, the first physical downlink channel does not include a PDSCH associated with a PDCCH and a HARQ process corresponding to the second state. That is, if the terminal device receives only the PDSCH associated with a PDCCH and a HARQ process corresponding to the second state, it is also considered that the first physical downlink channel is not received.

Optionally, the terminal device determines a bit size included in the first HARQ-ACK information according to the first DAI information and/or the reception situation of the first physical downlink channel.

In some embodiments, the terminal device may determine a bit size included in the first HARQ-ACK information based on the first DAI information and/or reception situation of the first physical downlink channel when determining that the first HARQ-ACK information needs to be multiplexed on the first PUSCH. As one implementation, the terminal device may determine a bit size included in the first HARQ-ACK information based on the first DAI information, wherein the first DAI information is used to indicate the total number of first physical downlink channels associated with the first PUSCH. It should be noted here that since the SPS PDSCH is not dynamically scheduled by the PDCCH, therefore the number indicated by the first DAI information does not include the number of SPS PDSCHs.

In some embodiments, the first DAI information associated with the first PUSCH includes 2 bits, as shown in Table 1, a value range of the first DAI information Y is 1 to 4, and assuming that the value indicated by the first DAI information received by the terminal device is Y, the terminal device determines the bit size included in the first HARQ-ACK information according to the first DAI information and the reception situation of the first physical downlink channel, including: when the total number of the first physical downlink channels received by the terminal device is less than or equal to Y, the total number X of the first physical downlink channels needing feedback of the HARQ-ACK information is equal to Y; when the total number of the first physical downlink channels received by the terminal device is greater than Y and less than or equal to Y+4, the total number X of the first physical downlink channels needing feedback of HARQ-ACK information is equal to Y+4; when the total number of the first physical downlink channels received by the terminal device is greater than Y+4 and less than or equal to Y+4*2, the total number X of the first physical downlink channels needing feedback of HARQ-ACK information is equal to Y+4*2, and so on. Accordingly, the first HARQ-ACK information includes HARQ-ACK information corresponding to X first physical downlink channels. In addition, if the terminal device needs to multiplex and transmit the HARQ-ACK information corresponding to the SPS PDSCH on the first PUSCH, the first HARQ-ACK information also includes the HARQ-ACK information corresponding to the SPS PDSCH.

In another implementation, the terminal device may determine the bit size included in the first HARQ-ACK information according to the reception situation of the first physical downlink channel, in other words, the first HARQ-ACK information includes the HARQ-ACK information corresponding to the first physical downlink channel received by the terminal device. Optionally, the first PUSCH is not associated with the first DAI information. For example, the first PUSCH is not scheduled by DCI or DCI scheduling the first PUSCH does not include the DAI information. Optionally, the first DAI information associated with the first PUSCH is not used to indicate the number of first physical downlink channels, e.g., the first DAI information includes 1 bit.

In another implementation, the terminal device may determine the bit size included in the first HARQ-ACK information according to the first DAI information and/or the reception situation of the first physical downlink channel, wherein the first DAI information is used to indicate whether the first HARQ-ACK information is multiplexed and transmitted on the first PUSCH. If the first DAI information associated with the first PUSCH received by the terminal device indicates a preset value, such as 1, the terminal device multiplexes and transmits the first HARQ-ACK information on the first PUSCH, and the number of bits included in the first HARQ-ACK information may be determined according to the number of candidate PDSCHs included in the HARQ feedback window. Or, if the first DAI information associated with the first PUSCH received by the terminal device indicates another preset value, such as 0, and the terminal device only receives one first physical downlink channel, the terminal device multiplexes and transmits the first HARQ-ACK information on the first PUSCH, wherein, the first HARQ-ACK information only includes the HARQ-ACK feedback information of the first physical downlink channel. Optionally, the terminal device is configured with Type-1 codebook feedback. Optionally, the DAI information associated with the first PUSCH includes 1 bit.

Optionally, if the terminal device needs to multiplex and transmit the HARQ-ACK information corresponding to the SPS PDSCH on the first PUSCH, the first HARQ-ACK information further includes the HARQ-ACK information corresponding to the SPS PDSCH.

Optionally, in some other embodiments of the present application, the first PUSCH is associated with a second physical downlink channel, the method 300 further includes: the terminal device determines whether the second HARQ-ACK information is multiplexed and transmitted on the first PUSCH and/or the number of bits included in the second HARQ-ACK information multiplexed on the first PUSCH according to a reception situation of the second physical downlink channel, wherein the second HARQ-ACK information corresponds to the reception situation of the second physical downlink channel.

Optionally, in some other embodiments of the present application, the first DCI further includes second DAI information indicating the number of second physical downlink channels associated with the first PUSCH.

Further, the method 300 further includes: the terminal device determines whether the second HARQ-ACK information is multiplexed and transmitted on the first PUSCH and/or the number of bits included in the second HARQ-ACK information multiplexed on the first PUSCH according to the second DAI information and/or the reception situation of the second physical downlink channel, wherein, the second HARQ-ACK information corresponds to the reception situation of the second physical downlink channel.

Optionally, the second physical downlink channel associated with the second PUSCH may refer to that a first PUSCH resource corresponding to the first PUSCH and an uplink HARQ-ACK feedback resource of the second physical downlink channel overlap at least partially in a time domain.

Optionally, the first physical downlink channel includes a downlink channel corresponding to a TB feedback, or the HARQ-ACK feedback of the first physical downlink channel corresponds to a TB-based HARQ-ACK feedback.

Optionally, the second physical downlink channel includes a downlink channel corresponding to a CBG feedback, or the HARQ-ACK feedback of the second physical downlink channel corresponds to a CBG-based HARQ-ACK feedback.

Optionally, when the first DCI includes the first DAI information and the second DAI information, a corresponding HARQ-ACK feedback codebook may include two HARQ-ACK feedback sub-codebooks, wherein the first HARQ-ACK feedback sub-codebook includes the TB-based feedback and the second HARQ-ACK feedback sub-codebook includes the Code Block Group (CBG)-based feedback, and the first DAI information and the second DAI information are used to determine sizes of the two HARQ-ACK sub-codebooks, respectively.

Optionally, the first DCI includes the second DAI information when at least one of the following conditions is satisfied: the terminal device is configured to feed back two HARQ-ACK sub-codebooks; the terminal device is configured with a code block group (CBG) transmission; or the terminal device is configured with a CBG feedback.

Hereinafter, description is made in connection with specific embodiments for the specific meaning of the second DAI information, and/or the specific implementation of the second physical downlink channel, and/or a method of whether the terminal device multiplexes and transmits the second HARQ-ACK information on the first PUSCH, and/or a method of how the terminal device determines a size of the second HARQ-ACK information multiplexed and transmitted on the first PUSCH.

### Implementation three

Optionally, in some embodiments, the second physical downlink channel includes at least one of: a PDSCH transmission associated with a PDCCH and a third HARQ process, wherein the third HARQ process includes a HARQ process corresponding to a first state; a PDCCH indicating release of an SPS PDSCH; a PDCCH indicating a Scell dormancy state; another PDCCH corresponding to HARQ-ACK information, in other words, a PDCCH associated with the HARQ-ACK information.

That is, the second physical downlink channel includes a first type PDSCH associated with a PDCCH and transmitted through a third HARQ process corresponding to the first state.

Optionally, the second physical downlink channel includes a first type PDSCH corresponding to CBG feedback.

Optionally, the third HARQ process includes at least one HARQ process.

Optionally, the second physical downlink channel does not include a PDSCH transmission associated with a PDCCH and a fourth HARQ process, wherein the fourth HARQ process includes a HARQ process corresponding to a second state.

Optionally, the second physical downlink channel does not include a second type PDSCH corresponding to CBG feedback.

Optionally, the fourth HARQ process includes at least one HARQ process.

Optionally, the second physical downlink channel may include at least one of: a first type PDSCH, a PDCCH indicating release of an SPS PDSCH, a PDCCH indicating a Scell dormancy state, or another PDCCH corresponding to the HARQ-ACK information, and may not include a second type PDSCH, wherein the second type PDSCH is associated with a PDCCH and transmitted through the HARQ process corresponding to the second state.

Optionally, in the Implementation three, the HARQ process corresponding to the second state does not correspond to the uplink HARQ-ACK feedback.

It should be understood that the number of bits of the second DAI information is not specifically limited in the present application.

In some embodiments, the second DAI information is 0 bit (i.e., not including the second DAI information), 1 bit, or 2 bits or other bits, etc.

Optionally, in some embodiments, the second DAI information is used to indicate whether the second HARQ-ACK information is multiplexed and transmitted on the first PUSCH. For example, the second DAI information includes 1 bit, when the 1 bit indicates 1, it is indicated that the second HARQ-ACK information is multiplexed and transmitted on the first PUSCH; when the 1 bit indicates 0, it is indicated that the second HARQ-ACK information is not multiplexed and transmitted on the first PUSCH.

Optionally, in some embodiments, the second DAI information is used to indicate the number of second physical downlink channels associated with the first PUSCH, when the second physical downlink channel is the case in the Implementation three, the number of the second physical downlink channels indicated by the second DAI information includes the number of at least one of first type PDSCHs, PDCCHs indicating the release of the SPS PDSCH, PDCCHs indicating the Scell dormancy state, or other PDCCHs corresponding to the HARQ-ACK information. Further optionally, the number of second physical downlink channels indicated by the second DAI information does not include the number of second type PDSCHs.

### Implementation four

The second physical downlink channel includes at least one of: a PDSCH transmission associated with a PDCCH and a third HARQ process, or a PDSCH transmission associated a PDCCH and a fourth HARQ process, wherein the third HARQ process includes a HARQ process corresponding to the first state and the fourth HARQ process includes a HARQ process corresponding to the second state; a PDCCH indicating release of a sSemi-Persistent Scheduling (SPS) PDSCH; a PDCCH indicating a Scell dormancy state; another PDCCH corresponding to the HARQ-ACK information, in other words, a PDCCH associated with the HARQ-ACK information.

That is, in the Implementation four, different from the Implementation three, the second physical downlink channel may include a PDSCH transmission associated with a PDCCH with a second HARQ process, wherein the second HARQ process includes a HARQ process corresponding to the second state, tn other words, the second physical downlink channel includes a second type PDSCH.

Optionally, the second physical downlink channel includes at least one of: the first type PDSCH, the second type PDSCH, a PDCCH indicating the release of the SPS PDSCH, a PDCCH indicating the Scell dormancy state, or another PDCCH corresponding to the HARQ-ACK information.

Optionally, in the Implementation four, the HARQ process corresponding to the second state corresponds to the uplink HARQ-ACK feedback.

Optionally, in some embodiments of the present application, the terminal device may determine meaning of the second DAI information according to the first indication information of the network device, wherein the first indication information is used to indicate whether the uplink HARQ-ACK feedback is performed for the HARQ process corresponding to the second state. Or, the terminal device may determine whether the uplink HARQ-ACK feedback is performed for the HARQ process corresponding to the second state according to the first indication information of the network device, wherein, the first indication information is used to indicate the meaning of the second DAI information.

For example, if the first indication information indicates that the uplink HARQ-ACK feedback is not performed for the HARQ process corresponding to the second state, the meaning of the second DAI information may be the case in the Implementation three. In this case, the terminal device may not feed back the HARQ feedback information corresponding to the PDSCH transmitted through the HARQ process of the second state to the network device. That is, only the HARQ feedback information corresponding to the PDSCH transmitted through the HARQ process of the first state is fed back to the network device.

For another example, if the first indication information indicates that the uplink HARQ-ACK feedback needs to be performed for the HARQ process corresponding to the second state, the meaning of the second DAI information may be the case in the Implementation four. In this case, the terminal device may feed back the HARQ feedback information corresponding to the PDSCH transmitted through the HARQ process of the second state to the network device. That is, the HARQ feedback information corresponding to PDSCHs transmitted through the HARQ processes of the first state and the second state is fed back to the network device.

Further, in some embodiments of the present application, the terminal device may further determine whether the second HARQ-ACK information corresponding to the second physical downlink channel is multiplexed and transmitted on the first PUSCH, and/or determine the number of bits included in the second HARQ-ACK information multiplexed on the first PUSCH.

It should be understood, in embodiments of the present application, the specific implementation for the terminal device to determine whether to multiplex and transmit the second HARQ-ACK information corresponding to the second physical downlink channel on the first PUSCH may refer to the related implementation for the terminal device to determine whether to multiplex and transmit the first HARQ-ACK information corresponding to the first physical downlink channel on the first PUSCH in the foregoing embodiments, which will not be repeated here again for brevity.

It should also be understood that in embodiments of the present application, specific implementation for the terminal device to determine the number of bits included in the second HARQ-ACK information multiplexed on the first PUSCH may refer to related implementation for the terminal device to determine the number of bits included in the first HARQ-ACK information multiplexed on the first PUSCH in the foregoing embodiments, which is not repeated here again for brevity.

In some other embodiments of the present application, if the number of the second physical downlink channels received by the terminal device is greater than or equal to 1, the terminal device multiplexes and transmits the second HARQ-ACK information on the first PUSCH; or, if the terminal device does not receive the second physical downlink channel, the terminal device does not multiplex and transmit the second HARQ-ACK information on the first PUSCH.

In still some embodiments of the present application, if the number of the second physical downlink channels received by the terminal device is greater than or equal to 1, the terminal device multiplexes and transmits the second HARQ-ACK information on the first PUSCH according to the second DAI information; or, if the terminal device does not receive the second physical downlink channel and the second DAI information indicates a preset value, the terminal device does not multiplex and transmit the second HARQ-ACK information on the first PUSCH.

In still some embodiments of the present application, if the terminal device is configured with the Type 1 codebook feedback, the second DAI information is not included in the first DCI.

Hereinafter, the function of the first DAI information and/or the second DAI information in the first DCI and the specific multiplexing mode are explained by taking the first DCI corresponding to the DCI format 0_1 and scheduling the first PUSCH transmission as an example in combination with several typical HARQ-ACK codebook feedback modes.

First, if the terminal device is configured with the Type-1 HARQ-ACK codebook feedback, the first DAI information includes 1 bit and the second DAI information includes 0 bit (in other words, the second DAI information is not included).

The first DAI information is used to indicate whether the first HARQ-ACK information is multiplexed on the first PUSCH.

For example, the first DAI information includes 1 bit, when the bit indicates 1, it is indicated that the first HARQ-ACK information is multiplexed and transmitted on the first PUSCH, and when the bit indicates 0, it is indicated that the first HARQ-ACK information is not multiplexed and transmitted on the first PUSCH.

For example, when the first DAI information indicates 1, the terminal device may determine the number of bits included in the first HARQ-ACK information based on the number of candidate PDSCHs included in the HARQ feedback window, or, when the first DAI information indicates 0 and the terminal device receives only one first physical downlink channel, the terminal device multiplexes and transmits the first HARQ-ACK information on the first PUSCH, wherein, the first HARQ-ACK information only includes the HARQ-ACK feedback information of the first physical downlink channel.

For example, if the total number of the first physical downlink channels associated with the first PUSCH sent by the network device is greater than 1, the network device sets the bit to be 1; or, if the network device does not send the first physical downlink channel associated with the first PUSCH or only sends one first physical downlink channel associated with the first PUSCH, the network device sets the bit to be 0.

Second, if the terminal device is configured with the Type-2 HARQ-ACK codebook feedback, then there are two cases as follows.

Case 1: If one HARQ-ACK codebook is included, or the terminal device is not configured with the CBG transmission or CBG feedback, then the first DAI information includes 2 bits for determining the size of the HARQ-ACK codebook, and the second DAI information includes 0 bit (in other words, the second DAI information is not included).

The first DAI information is used to indicate the number of first physical downlink channels associated with the first PUSCH.

The network device may set the value of the first DAI information according to the total number of the scheduled first physical downlink channels associated with the first PUSCH.

Case 2: If two HARQ-ACK sub-codebooks are included, or the terminal device is configured with the CBG transmission or CBG feedback, then the first DAI information includes 2 bits for determining the size of the first HARQ-ACK sub-codebook, and the second DAI information includes 2 bits for determining the size of the second HARQ-ACK sub-codebook.

The first DAI information is used to indicate the number of first physical downlink channels associated with the first PUSCH. Herein, the first physical downlink channel corresponds to the TB feedback, i.e., the first physical downlink channel includes a physical downlink channel needing TB-based feedback.

The first DAI information is used to indicate the number of second physical downlink channels associated with the first PUSCH. Herein, the second physical downlink channel corresponds to the CBG feedback, i.e., the second physical downlink channel includes a physical downlink channel needing CBG-based feedback.

Third, if the terminal device is configured with eType-2 HARQ-ACK codebook feedback, then there are four cases as follows.

Case 1: The first DAI information includes 2 bits for determining the size of the HARQ-ACK codebook, and the second DAI information includes 0 bit (in other words, the second DAI information is not included).

If HARQ-ACK information for two groups is to be fed back on the first PUSCH, the first DAI information is used to indicate the number of first physical downlink channels of a corresponding first group (or group 0) associated with the first PUSCH.

If HARQ-ACK information for one group is to be fed back on the first PUSCH, the first DAI information is used to indicate the number of first physical downlink channels of a corresponding scheduling group (e.g. group 0 or group 1) associated with the first PUSCH.

Case 2: the first DAI information includes two pieces of DAI information, each DAI information includes 2 bits, i.e., the first DAI information includes 4 bits for determining the size of the HARQ-ACK codebook, and the second DAI information includes 0 bit (in other words, the second DAI information is not included).

The first piece of DAI information in the first DAI information is used to indicate the number of first physical downlink channels corresponding to the first group associated with the first PUSCH. The second piece of DAI information in the first DAI information is used to indicate the number of first physical downlink channels corresponding to the second group associated with the first PUSCH.

Case 3: the CBG feedback is configured, the first DAI information includes 2 bits, and the second DAI information includes 2 bits.

If HARQ-ACK information for two groups is to be fed back on the first PUSCH, the first DAI information is used to indicate the number of first physical downlink channels corresponding to the first group and corresponding to TB feedback and associated with the first PUSCH. The second DAI information is used to indicate the number of second physical downlink channels corresponding to the first group and corresponding to the CBG feedback and associated with the first PUSCH.

If one group of HARQ-ACK information is to be fed back on the first PUSCH, the first DAI information is used to indicate the number of first physical downlink channels corresponding to a scheduling group (e.g. group 0 or group 1) and corresponding to TB feedback and associated with the first PUSCH. The second DAI information is used to indicate the number of second physical downlink channels corresponding to a scheduling group (e.g. group 0 or group 1) and corresponding to CBG feedback and associated with the first PUSCH.

Case 4: the CBG feedback is configured, the first DAI information includes two pieces of DAI information, each piece of DAI information includes 2 bits, and the second DAI information includes two pieces of DAI information, each piece of DAI information includes 2 bits.

The first piece of DAI information in the first DAI information is used to indicate the number of first physical downlink channels corresponding to the first group and corresponding to the TB feedback and associated with the first PUSCH.

The second piece of DAI information in the first DAI information is used to indicate the number of first physical downlink channels corresponding to the second group and corresponding to the TB feedback and associated with the first PUSCH.

The first piece of DAI information in the second DAI information is used to indicate the number of second physical downlink channels corresponding to the first group and corresponding to the CBG feedback and associated with the first PUSCH.

The second piece of DAI information in the second DAI information is used to indicate the number of second physical downlink channels corresponding to the second group and corresponding to the CBG feedback and associated with the first PUSCH.

As an example rather than limitation, in a case where the terminal device is configured with the eType-2 HARQ-ACK codebook feedback, the size of the DAI information in the DCI format 0_1 includes one of the cases shown in Table 3.

**Table 3**

| | First DAI information | Second DAI information | Total size of DAI information |
|---|---|---|---|
| CBG feedback is not included and UL-TotalDAI-Included-r16 is not configured | 2 bits, including 1 piece of DAI information, for example, represented by {a1, a0} | 0 | 2 bits |
| CBG feedback is not included and UL-TotalDAI-Included-r16 is configured | 4 bits, including 2 pieces of DAI information, for example, represented by {a3, a2, a1, a0} | 0 | 4 bits |
| CBG feedback is included and UL-TotalDAI-Included-r16 is not configured | 2 bits, including 1 piece of DAI information, for example, represented by {a1, a0} | 2 bits, including 1 piece of DAI information, for example, represented by {b1, b0} | 4 bits |
| CBG feedback is not included and UL-TotalDAI-Included-r16 is configured | 4 bits, including 2 pieces of DAI information, for example, represented by {a3, a2, a1, a0} | 4 bits, including 2 pieces of DAI information, for example, represented by {b3, b2, b1, b0} | 8 bits |

In the case of Table 3, a0 or b0 represents a least significant bit (LSB) in the DAI information, and a3 or b3 represents a most significant bit (MSB) in the DAI information.

Optionally, if the first DCI includes the first DAI information and the meaning of the first DAI information is the case in the Implementation one, S320 may include: if the terminal device is not configured with the CBG transmission (e.g., the terminal device is not provided with a high-level parameter PDSCH-CodeBlockGroupTransmission), and the terminal device receives the first PUSCH transmission scheduled by the first DCI format including the first DAI information, and a value of the first DAI information is a preset value, and the terminal device does not receive a PDCCH corresponding to PDSCH reception of the HARQ process with an enabled state scheduled by the DCI format 1_0 or DCI format 1_1, or does not receive a PDCCH indicating the release of the SPS PDSCH on any serving cell, in a PDCCH detection opportunity corresponding to the HARQ feedback window, and the terminal device does not multiplex the HARQ-ACK information corresponding to the SPS PDSCH reception on the first PUSCH, then the terminal device does not multiplex the first HARQ-ACK information on the first PUSCH; and/or, if the terminal device receives the first PUSCH transmission scheduled by the first DCI format including the first DAI information corresponding to a certain group index, and the value of the first DAI information is a preset value, and the terminal device does not receive a PDCCH corresponding to PDSCH reception corresponding to the group index and corresponding to an enabled HARQ process and scheduled by any DCI format, and the terminal device does not receive a request for feedback of the HARQ-ACK information corresponding to the group index indicated by any DCI format, then the terminal device does not multiplex the HARQ-ACK information corresponding to the group index on the first PUSCH.

Optionally, if the first DCI includes the first DAI information and the meaning of the first DAI information is the case in the Implementation two, S320 may include: if the terminal device is not configured with the CBG transmission (e.g., the terminal device is not provided with a high-level parameter PDSCH-CodeBlockGroupTransmission), and the terminal device receives the first PUSCH transmission scheduled by the first DCI format including the first DAI information, and the value of the first DAI information is a preset value, and the terminal device does not receive a PDCCH corresponding to PDSCH reception of the HARQ processes with the enabled state and the disabled state scheduled by the DCI format 1_0 or DCI format 1_1, or does not receive a PDCCH indicating the release of the SPS PDSCH on any serving cell, in the PDCCH detection opportunity corresponding to the HARQ feedback window, and the terminal device does not multiplex the HARQ-ACK information corresponding to the SPS PDSCH reception on the first PUSCH, then the terminal device does not multiplex the first HARQ-ACK information on the first PUSCH; and/or, if the terminal device receives the first PUSCH transmission scheduled by the first DCI format including the first DAI information corresponding to a certain group index, and the value of the first DAI information is a preset value, and the terminal device does not receive PDSCH reception corresponding to the group index and corresponding to the HARQ processes with the enabled state and the disabled state and scheduled by any DCI format, and the terminal device does not receive a request for feedback of the HARQ-ACK information corresponding to the group index indicated in any DCI format, then the terminal device does not multiplex the HARQ-ACK information corresponding to the group index on the first PUSCH.

Optionally, if the first DCI includes the first DAI information and the second DAI information, and the meaning of the first DAI information and the meaning of the second DAI information are the cases in the Implementation one and Implementation three respectively, in some specific embodiments, S320 may include: if the terminal device is configured with the CBG transmission (e.g., the terminal device is provided with a high-level parameter PDSCH-CodeBlockGroupTransmission), and the terminal device receives the first PUSCH transmission scheduled by the first DCI format including the first DAI information and the second DAI information, and a value of the first DAI information is a preset value or a value of the second DAI information is a preset value, and the terminal device does not receive a PDCCH corresponding to PDSCH reception of the HARQ process with an enabled state scheduled by a corresponding DCI format 1_0 or DCI format 1_1, or does not receive a PDCCH indicating the release of SPS PDSCH on any serving cell, or does not receive a PDCCH indicating the DCI format 1_1 of the SCell dormancy, in the PDCCH detection opportunity corresponding to the HARQ feedback window, and the terminal device does not multiplex the HARQ-ACK information corresponding to the SPS PDSCH reception on the first PUSCH, then the terminal device does not multiplex the HARQ-ACK information in the corresponding first sub-codebook or the corresponding second sub-codebook on the first PUSCH.

Optionally, if the first DCI includes the first DAI information and the second DAI information, and the meaning of the first DAI information and the meaning of the second DAI information are the cases in the Implementation two and Implementation four respectively, in some specific embodiments, S320 may include: if the terminal device is configured with the CBG transmission (e.g., the terminal device is provided with a high-level parameter PDSCH-CodeBlockGroupTransmission), and the terminal device receives the first PUSCH transmission scheduled by the first DCI format including the first DAI information and the second DAI information, and a value of the first DAI information is a preset value or a value of the second DAI information is a preset value, and the terminal device does not receive a PDCCH corresponding to PDSCH reception of the HARQ processes with an enabled state and a disabled state scheduled by the corresponding DCI format 1_0 or DCI format 1_1, or does not receive a PDCCH indicating the release of SPS PDSCH on any serving cell, or does not receive a PDCCH indicating the DCI format 1_1 of SCell dormancy, in the PDCCH detection opportunity corresponding to the HARQ feedback window, and the terminal device does not multiplex the HARQ-ACK information corresponding to the SPS PDSCH reception on the first PUSCH, then the terminal device does not multiplex HARQ-ACK information in the corresponding first sub-codebook or the corresponding second sub-codebook on the first PUSCH.

Therefore, in some embodiments of the present application, when a terminal device is configured with one or more HARQ processes corresponding to a disabled state, if the PUSCH resource and the PUCCH resource of the terminal device overlap in a time domain, the terminal device may determine whether the HARQ-ACK information needs to be multiplexed and transmitted on the PUSCH or determine the size of the HARQ-ACK information multiplexed and transmitted on the PUSCH according to a value of the DAI domain in the DCI scheduling the PUSCH resource and/or the reception situation of the physical downlink channel. The number of downlink transmissions indicated by the DAI domain may not include the number of PDSCH transmissions using the HARQ process with the disabled state, thereby reducing the overhead for transmitting uplink control information on the PUSCH.

Method embodiments of the present application are described in detail above in combination with FIG. 3, and device embodiments of the present application will be described in detail below in combination with FIGs. 4 to 8. It should be understood that the device embodiments correspond to the method embodiments, and descriptions of device embodiments may refer to the method embodiments.

FIG. 4 shows a schematic block diagram of a terminal device 400 according to an embodiment of the present application. As shown in FIG. 4, the terminal device 400 includes a processing unit 410.

The processing unit 410 is configured to determine to transmit a first physical uplink shared channel (PUSCH), wherein the first PUSCH is associated with a first physical downlink channel; and determine whether to multiplex and transmit the first HARQ-ACK information on the first PUSCH according to a reception situation of the first physical downlink channel, wherein, the first HARQ-ACK information corresponds to the reception situation of the first physical downlink channel.

Optionally, in some embodiments of the present application, the first physical downlink channel includes at least one of: a physical downlink shared channel (PDSCH) transmission associated with a physical downlink control channel (PDCCH) and a first hybrid automatic retransmission request (HARQ) process, wherein the first HARQ process comprises a HARQ process corresponding to a first state; a PDCCH indicating release of a Semi-Persistent Scheduling (SPS) PDSCH; a PDCCH indicating a Scell dormance state; or a PDCCH associated with HARQ-ACK information.

Optionally, in some embodiments, the first physical downlink channel does not include a PDSCH transmission associated with a PDCCH and a second HARQ process, wherein the second HARQ process includes a HARQ process corresponding to a second state.

Optionally, in some embodiments, the first physical downlink channel includes at least one of: a PDSCH transmission associated with the PDCCH and the first HARQ process and a PDSCH transmission associated with the PDCCH and the second HARQ process, wherein the first HARQ process includes a HARQ process corresponding to the first state, and the second HARQ process includes a HARQ process corresponding to the second state; a PDCCH indicating release of a Semi-Persistent Scheduling (SPS) PDSCH; a PDCCH indicating a Scell dormancy state; or a PDCCH associated with HARQ-ACK information.

Optionally, in some embodiments, the first PUSCH is associated with a first physical downlink channel, including: a first PUSCH resource corresponding to the first PUSCH and an uplink HARQ-ACK feedback resource corresponding to the first physical downlink channel at least partially overlap in a time domain.

Optionally, in some embodiments, the first physical downlink channel corresponds to a transport block (TB)-based HARQ-ACK feedback mode.

Optionally, in some embodiments, the first PUSCH is associated with a second physical downlink channel, and the processing unit 410 is further configured to determine whether to multiplex and transmit the second HARQ-ACK information on the first PUSCH according to a reception situation of the second physical downlink channel, wherein, the second HARQ-ACK information corresponds to the recption situation of the second physical downlink channel.

Optionally, in some embodiments, the second physical downlink channel includes a PDSCH transmission associated with a PDCCH and a third HARQ process, wherein the third HARQ process includes a HARQ process corresponding to the first state.

Optionally, in some embodiments, the second physical downlink channel does not include a PDSCH transmission associated with a PDCCH and a fourth HARQ process, wherein the fourth HARQ process includes a HARQ process corresponding to the second state.

Optionally, in some embodiments, the second physical downlink channel includes a PDSCH transmission associated with the PDCCH and the third HARQ process and a PDSCH transmission associated with the PDCCH and the fourth HARQ process, wherein the third HARQ process includes a HARQ process corresponding to the first state, and the fourth HARQ process includes a HARQ process corresponding to the second state.

Optionally, in some embodiments, the first PUSCH is associated with a second physical downlink channel, including: a first PUSCH resource corresponding to the first PUSCH and an uplink HARQ-ACK feedback resource corresponding to the second physical downlink channel at least partially overlap in a time domain.

Optionally, in some embodiments, the second physical downlink channel corresponds to a code block group (CBG)-based HARQ-ACK feedback mode.

Optionally, in some embodiments, the device 400 further includes a communication unit 420.

The communication unit 420 is configured to receive first downlink control information (DCI) sent by a network device, wherein the first DCI is used for scheduling the first PUSCH transmission, the first DCI includes first downlink assignment indication (DAI) information, and the first DAI information is used for indicating the number of first physical downlink channels associated with the first PUSCH.

The processing unit 410 is further configured to determine whether the first HARQ-ACK information is multiplexed and transmitted on the first PUSCH according to the first DAI information and a reception situation of the first physical downlink channel.

Optionally, in some embodiments, a DCI format corresponding to the first DCI includes at least one of the following: DCI Format 0_1 and DCI Format 0_2.

Optionally, in some embodiments, the processing unit 410 is further configured to multiplex and transmit the first HARQ-ACK information on the first PUSCH according to the first DAI information when the number of first physical downlink channels received by the terminal device is greater than or equal to 1, or the terminal device needs to multiplex and transmit the HARQ-ACK information corresponding to the SPS PDSCH on the first PUSCH.

Optionally, in some embodiments, the processing unit 410 is further configured to not multiplex and transmit the first HARQ-ACK information on the first PUSCH when the terminal device does not receive the first physical downlink channel, and the terminal device does not need to multiplex and transmit the HARQ-ACK information corresponding to the SPS PDSCH on the first PUSCH, and the first DAI information indicates a preset value.

Optionally, in some embodiments, the first PUSCH is further associated with the second physical downlink channel, the first DCI further includes the second DAI information indicating the number of second physical downlink channels associated with the first PUSCH, and the processing unit 410 is further configured to determine whether the second HARQ-ACK information is multiplexed and transmitted on the first PUSCH according to the second DAI information and the reception situation of the second physical downlink channel, wherein, the second HARQ-ACK information corresponds to the reception situation of the second physical downlink channel.

Optionally, in some embodiments, the processing unit 410 is further configured to multiplex and transmit the second HARQ-ACK information on the first PUSCH in accordance with the second DAI information when the number of the second physical downlink channels received by the terminal device is greater than or equal to 1.

Optionally, in some embodiments, the processing unit 410 is further configured to not multiplex and not transmit the second HARQ-ACK information on the first PUSCH iwhen the terminal device does not receive the second physical downlink channel and the second DAI information indicates a preset value.

Optionally, in some embodiments, the preset value is 0 or 4.

Optionally, in some embodiments, the processing unit 410 is further configured to determine to transmit the first PUSCH according to scheduling information sent by the network device, wherein the scheduling information does not include DCI, or the scheduling information includes second DCI and the second DCI does not include DAI information.

Optionally, in some embodiments, a DCI format corresponding to the second DCI includes DCI format 0_0.

Optionally, in some embodiments, the processing unit 410 is further configured to multiplex and transmit the first HARQ-ACK information on the first PUSCH when the number of the first physical downlink channels received by the terminal device is greater than or equal to 1, or the terminal device needs to multiplex and transmit the HARQ-ACK information corresponding to the SPS PDSCH on the first PUSCH.

Optionally, in some embodiments, the processing unit 410 is further configured to not multiplex and not transmit the first HARQ-ACK information on the first PUSCH when the terminal device does not receive the first physical downlink channel and the terminal device does not need to multiplex and transmit the HARQ-ACK information corresponding to the SPS PDSCH on the first PUSCH.

Optionally, in some embodiments, the processing unit 410 is further configured to multiplex and transmit the second HARQ-ACK information on the first PUSCH when the number of the second physical downlink channels received by the terminal device is greater than or equal to 1.

Optionally, in some embodiments, the processing unit 410 is further configured to not multiplex and not transmit the second HARQ-ACK information on the first PUSCH when the terminal device does not receive the second physical downlink channel.

The HARQ process corresponding to the first state includes at least one of: a HARQ process corresponding to an enabled state; a HARQ process not configured with a disabled parameter; or a HARQ process corresponding to uplink HARQ-ACK feedback.

The HARQ process corresponding to the second state includes at least one of: the HARQ process corresponding to a disabled state, or the HARQ process configured with a disabled parameter.

Optionally, in some embodiments, the processing unit 410 is further configured to determine that the uplink HARQ-ACK feedback is not performed for the HARQ process corresponding to the second state according to the first indication information sent by the network device, wherein, the first indication information is used to indicate whether the uplink HARQ-ACK feedback is performed for the HARQ process corresponding to the second state.

Optionally, in some embodiments, the processing unit 410 is further configured to determine that the uplink HARQ-ACK feedback needs to be performed for the HARQ process corresponding to the second state according to the first indication information sent by the network device, wherein, the first indication information is used to indicate whether the uplink HARQ-ACK feedback is performed for the HARQ process corresponding to the second state.

Optionally, in some embodiments, the communication unit may be a communication interface or a transceiver, or an input/output interface of a communication chip or a system on a chip. The processing unit may be one or more processors.

It should be understood that the terminal device 400 in accordance with the embodiments of the present application may correspond to the terminal device in the method embodiments of the present application, and the above-mentioned and other operations and/or functions of various units in the terminal device 400 are respectively for implementing corresponding processes of the terminal device in the method 300 shown in FIG. 2, and will not be repeated herein for brevity.

FIG. 5 is a schematic block diagram of a network device according to an embodiment of the present application. The network device 500 in FIG. 5 includes a communication unit 510.

The communication unit 510 is configured to send first downlink control information (DCI) to a terminal device, wherein the first DCI is used for scheduling a first physical uplink shared channel (PUSCH) transmission, the first DCI includes a first downlink assignment indication (DAI) information, and the first DAI information is used for indicating the number of first physical downlink channels associated with the first PUSCH.

Optionally, in some embodiments, the first physical uplink channel includes at least one of: a physical downlink shared channel (PDSCH) transmission associated with a physical downlink control channel (PDCCH) and a first hybrid automatic retransmission request (HARQ) process, wherein the first HARQ process includes a HARQ process corresponding to a first state; a PDCCH indicating release of a Semi-Persistent Scheduling (SPS) PDSCH; a PDCCH indicating a Scell dormancy state; or a PDCCH associated with HARQ-ACK information.

Optionally, in some embodiments, the first physical downlink channel does not include a PDSCH transmission associated with the PDCCH and a second HARQ process, wherein the second HARQ process includes a HARQ process corresponding to a second state.

Optionally, in some embodiments, the first physical downlink channel includes at least one of: the PDSCH transmission associated with the PDCCH and the first HARQ process and the PDSCH transmission associated with the PDCCH and the second HARQ process, wherein the first HARQ process includes a HARQ process corresponding to the first state and the second HARQ process includes a HARQ process corresponding to the second state; a PDCCH indicating release of a Semi-Persistent Scheduling (SPS) PDSCH; a PDCCH indicating a Scell dormancy state; a PDCCH associated with HARQ-ACK information.

Optionally, in some embodiments, the first DCI further includes second DAI information indicating the number of second physical downlink channels associated with the first PUSCH.

Optionally, in some embodiments, the second physical downlink channel includes a PDSCH transmission associated with the PDCCH and a third HARQ process, wherein the third HARQ process includes a HARQ process corresponding to the first state.

Optionally, in some embodiments, the second physical downlink channel does not include a PDSCH transmission associated with the PDCCH and a fourth HARQ process, wherein the fourth HARQ process includes a HARQ process corresponding to the second state.

Optionally, in some embodiments, the second physical downlink channel includes a PDSCH transmission associated with a PDCCH and a third HARQ process and a PDSCH transmission associated with a PDCCH and a fourth HARQ process, wherein the third HARQ process includes a HARQ process corresponding to the first state and the fourth HARQ process includes a HARQ process corresponding to the second state.

Optionally, in some embodiments, the terminal device is configured to feed back two HARQ-ACK sub-codebooks; or, the terminal device is configured with a code block group (CBG) transmission; or, the terminal device is configured with a CBG feedback.

The HARQ process corresponding to the first state includes at least one of: a HARQ process corresponding to an enabled state; a HARQ process not configured with a disabled parameter; or a HARQ process corresponding to uplink HARQ-ACK feedback.

The HARQ process corresponding to the second state includes at least one of: the HARQ process corresponding to a disabled state; or the HARQ process configured with a disabled parameter.

Optionally, in some embodiments, the communication unit 510 is further configured to send first indication information to the terminal device, wherein, the first indication information indicates that the uplink HARQ-ACK feedback is not performed for the HARQ process corresponding to the second state.

Optionally, in some embodiments, the communication unit 510 is further configured to send the first indication information to the terminal device, wherein, the first indication information indicates that the uplink HARQ-ACK feedback needs to be performed for the HARQ process corresponding to the second state.

Optionally, in some embodiments, the second DAI information is used to indicate the number of second physical downlink channels associated with the first PUSCH, wherein a first PUSCH resource corresponding to the first PUSCH and an uplink HARQ-ACK feedback resource corresponding to the second physical downlink channel overlap at least partially in a time domain.

Optionally, in some embodiments, the first DAI information is used to indicate the number of first physical downlink channels associated with the first PUSCH, wherein the first PUSCH resource corresponding to the first PUSCH and an uplink HARQ-ACK feedback resource corresponding to the first physical downlink channel at least partially overlap in a time domain.

Optionally, in some embodiments, a DCI format corresponding to the first DCI includes at least one of the following: DCI Format 0_1 or DCI Format 0_2.

Optionally, in some embodiments, the network device 500 further includes a processing unit.

The processing unit is configured to determine a value of the first DAI information and/or a value of the second DAI information according to a situation of the scheduled first physical downlink channel and/or the scheduled second physical downlink channel.

Optionally, in some embodiments, the communication unit may be a communication interface or a transceiver, or an input/output interface of a communication chip or a system on a chip. The processing unit may be one or more processors.

It should be understood that the network device 500 in accordance with the embodiments of the present application may correspond to the network device in the method embodiments of the present application, and the above-mentioned and other operations and/or functions of various units in the network device 500 are respectively for implementing corresponding processes of the network device in the method 300 shown in FIG. 3, and will not be repeated herein for brevity.

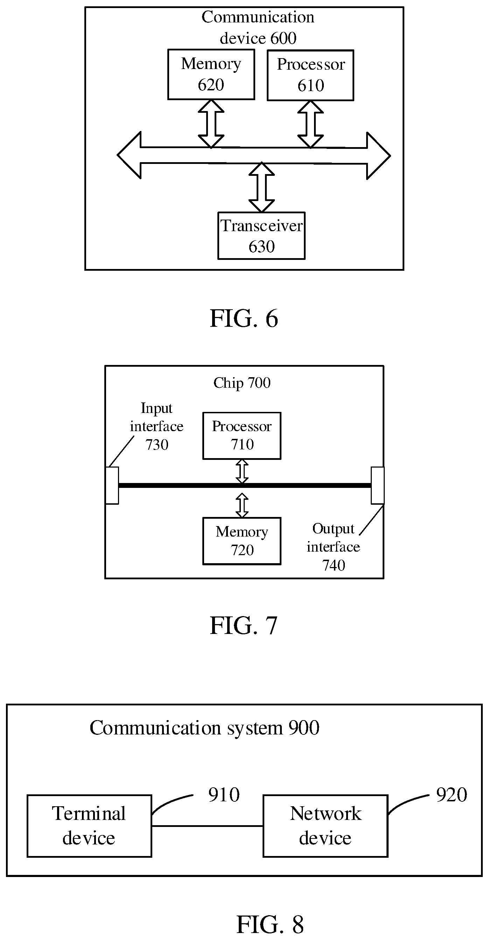

FIG. 6 is a schematic diagram of structure of a communication device 600 according to an embodiment of the present application. The communication device 600 shown in FIG. 6 includes a processor 610, which may call and run a computer program from a memory to implement the methods in the embodiments of the present application.

Optionally, as shown in FIG. 6, the communication device 600 may further include a memory 620. The processor 610 may call and run a computer program from the memory 620 to implement the methods in the embodiments of the present application.

The memory 620 may be a separate device independent of the processor 610, or may be integrated in the processor 610.

Optionally, as shown in FIG. 6, the communication device 600 may further include a transceiver 630, and the processor 610 may control the transceiver 630 to communicate with other devices. Specifically, the transceiver 630 may send information or data to other devices or receive information or data sent by other devices.

The transceiver 630 may include a transmitter and a receiver. The transceiver 630 may further include antennas, the number of which may be one or more.

Optionally, the communication device 600 may specifically be the network device in the embodiments of the present application, and the communication device 600 may implement the corresponding processes implemented by the network device in various methods in the embodiment of the present application, which will not be repeated herein for brevity.

Optionally, the communication device 600 may specifically be the mobile terminal/terminal device in accordance with the embodiments of the present application, and the communication device 600 may implement the corresponding processes implemented by the mobile terminal/terminal device in various methods in the embodiments of the present application, which will not be repeated herein for brevity.

FIG. 7 is a schematic diagram of structure of a chip according to an embodiment of the present application. The chip 700 shown in FIG. 7 includes a processor 710. The processor 710 may call and run a computer program from a memory to implement the methods in the embodiments of the present application.

Optionally, as shown in FIG. 7, the chip 700 may further include a memory 720. The processor 710 may call and run a computer program from the memory 720 to implement the methods in the embodiments of the present application.

Herein, the memory 720 may be a separate component independent of the processor 710, or may be integrated in the processor 710.

Optionally, the chip 700 may further include an input interface 730. The processor 710 may control the input interface 730 to communicate with other devices or chips, and specifically, may acquire information or data sent by other devices or chips.

Optionally, the chip 700 may further include an output interface 740. The processor 710 may control the output interface 740 to communicate with other devices or chips, and specifically, may output information or data to other devices or chips.

Optionally, the chip may be applied to the network device in the embodiments of the present application, and the chip may implement the corresponding processes implemented by the network device in various methods in the embodiments of the present application, which will not be repeated herein for brevity.

Optionally, the chip may be applied to the mobile terminal/terminal device in the embodiments of the present application, and the chip may implement corresponding processes implemented by the mobile terminal/terminal device in various methods of the embodiments of the present application, which will not be repeated herein for brevity.

It should be understood that the chip mentioned in the embodiments of the present application may also be referred to as a system-level chip, a system chip, a chip system, or a system on chip, etc.

FIG. 8 is a schematic block diagram of a communication system 900 according to an embodiment of the present application. As shown in FIG. 8, the communication system 900 includes a terminal device 910 and a network device 920.

The terminal device 910 may be configured to implement the corresponding functions implemented by the terminal device in the above-mentioned methods, and the network device 920 may be configured to implement the corresponding functions implemented by the network device in the above-mentioned methods, which will not be repeated herein for brevity.

It should be understood that the processor in the embodiments of the present application may be an integrated circuit chip having a signal processing capability. In an implementation process, the acts of the method embodiments described above may be accomplished through an integrated logic circuit of hardware in the processor or instructions in a form of software. The above processor may be a general purpose processor, a Digital Signal Processor (DSP), an Application Specific Integrated Circuit (ASIC), a Field Programmable Gate Array (FPGA), or another programmable logic device, a discrete gate or transistor logic device, or a discrete hardware component. The processor may implement various methods, acts, and logic block diagrams disclosed in the embodiments of the present application. The general purpose processor may be a microprocessor, or the processor may be any conventional processor, or the like. The acts of the methods disclosed in the embodiments of the present application may be directly embodied as execution by a hardware decoding processor, or execution by a combination of hardware in the decoding processor and software modules. The software modules may be located in a storage medium which is mature in the art, such as a random access memory, a flash memory, a read-only memory, a programmable read-only memory, an electrically erasable programmable memory, or a register. The storage medium is located in a memory, and the processor reads information in the memory and completes the acts of the above method in combination with its hardware.

It may be understood that the memory in the embodiments of the present application may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. By exemplary but not restrictive description, many forms of RAMs may be used, such as a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct Rambus dynamic random access memory (DR RAM). It should be noted that the memory in the systems and methods described herein is intended to include, but not be limited to, these and any other suitable types of memories.

It should be understood that the above memories are described as examples rather than limitations. For example, the memory in the embodiments of the present application may be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct Rambus RAM (DR RAM), etc. That is to say, the memories in the embodiments of the present application are intended to include, but are not limited to, these and any other suitable types of memories.

An embodiment of the present application further provides a computer-readable storage medium configured to store a computer program.

Optionally, the computer-readable storage medium may be applied to the network device in the embodiments of the present application, and the computer program causes a computer to perform the corresponding processes implemented by the network device in various methods in the embodiments of the present application, which will not be repeated herein for brevity.

Optionally, the computer readable storage medium may be applied to the mobile terminal/terminal device in the embodiments of the present application, and the computer program causes a computer to perform the corresponding processes implemented by the mobile terminal/terminal device in various methods in accordance with the embodiments of the present application, which will not be repeated herein for brevity.

An embodiment of the present application also provides a computer program product including computer program instructions.

Optionally, the computer program product may be applied to the network device in the embodiments of the present application, and the computer program instructions cause a computer to perform the corresponding processes implemented by the network device in various methods in the embodiments of the present application, which will not be repeated herein for brevity.

Optionally, the computer program product may be applied to the mobile terminal/terminal device in the embodiments of the present application, and the computer program instructions cause a computer to perform the corresponding processes implemented by the mobile terminal/terminal device in various methods in accordance with the embodiments of the present application, which will not be repeated herein for brevity.

An embodiment of the present application also provides a computer program.

Optionally, the computer program may be applied to the network device in the embodiments of the present application. The computer program, when running on a computer, causes the computer to perform the corresponding processes implemented by the network device in various methods in the embodiments of the present application, which will not be repeated herein for brevity.

Optionally, the computer program may be applied to the mobile terminal/terminal device in the embodiments of the present application. The computer program, when running on a computer, causes the computer to perform the corresponding processes implemented by the mobile terminal/terminal device in various methods in accordance with the embodiments of the present application, which will not be repeated herein for brevity.

A person of ordinary skill in the art may recognize that the elements and algorithm acts in various examples described in combination with the embodiments disclosed herein can be implemented in electronic hardware, or a combination of computer software and electronic hardware. Whether these functions are implemented in hardware or software depends on the specific application and design constraints of the technical solution. Skilled artisans may use different methods to implement the described functions for each particular application, but such implementation should not be considered to be beyond the scope of the present application.

Those skilled in the art may clearly understand that for the sake of convenience and conciseness of description, the specific working processes of the systems, devices and units described above may be described with reference to the corresponding processes in the above method embodiments and will not be repeated herein.

In several embodiments provided by the present application, it should be understood that the disclosed systems, devices and methods may be implemented in other ways. For example, the device embodiments described above are only illustrative, for example, the division of the units is only a logical function division, and there may be other division manners in actual implementations. For example, multiple units or components may be combined or integrated into another system, or some features may be ignored or not executed. In addition, the shown or discussed coupling or direct coupling or communication connection between each other may be an indirect coupling or communication connection through some interfaces, devices or units, or may be in electrical, mechanical or other forms.

The unit described as a separate component may or may not be physically separated, and the component shown as a unit may or may not be a physical unit, i.e., it may be located in one place or may be distributed over multiple network units. Part or all of the units may be selected according to actual needs to achieve the purpose of the solution of the embodiments.

In addition, various functional units in various embodiments of the present application may be integrated into one processing unit, or may exist physically separately, or two or more than two units may be integrated into one unit.

The functions, if implemented in a form of software functional units and sold or used as an independent product, may be stored in a computer-readable storage medium. Based on such understanding, the technical solution of the present application, or the part contributing to the prior art, or a part of the technical solution, may be embodied in the form of a software product. The software product is stored in a storage medium, and includes several instructions for causing a computer device (which may be a personal computer, a server, or a network device, etc.) to perform all or part of the acts of various embodiments of the present application. The aforementioned storage medium includes various media capable of storing program codes, such as a U disk, a mobile hard disk, a read-only memory (ROM), a random access memory (RAM), a magnetic disk, or an optical disk, etc.

## Claims

1. A wireless communication method, comprising:
determining, by a terminal device, to transmit a first physical uplink shared channel, PUSCH;
determining (S320), by the terminal device, whether to multiplex and transmit first Hybrid Automatic Repeat Request Acknowledgement, HARQ-ACK, information on the first PUSCH according to a reception situation of a first physical downlink channel, wherein, the first HARQ-ACK information corresponds to the reception situation of the first physical downlink channel;
**characterized in that** the first PUSCH is associated with the first physical downlink channel;
the first physical downlink channel comprises: a physical downlink shared channel, PDSCH, transmission associated with a physical downlink control channel, PDCCH, and a first hybrid automatic retransmission request, HARQ, process, wherein the first HARQ process comprises a HARQ process corresponding to a first state rather than a second state;
wherein the HARQ process corresponding to the first state comprises: a HARQ process corresponding to an enabled state; and the HARQ process corresponding to the second state comprises: a HARQ process corresponding to a disabled state;
wherein determining, by the terminal device to transmit the first PUSCH, comprises:
receiving, by the terminal device, first downlink control information, DCI, sent by a network device, wherein the first DCI is used for scheduling the first PUSCH transmission, the first DCI comprises first downlink assignment indication, DAI, information, and the first DAI information is used for indicating a number of first physical downlink channels associated with the first PUSCH;
determining, by the terminal device, whether to multiplex and transmit the first HARQ-ACK information on the first PUSCH according to the reception situation of the first physical downlink channel, comprises:
determining, by the terminal device, whether to multiplex and transmit the first HARQ-ACK information on the first PUSCH according to the first DAI information and the reception situation of the first physical downlink channel;
determining, by the terminal device, whether to multiplex and transmit the first HARQ-ACK information on the first PUSCH according to the first DAI information and the reception situation of the first physical downlink channel, comprises:
not multiplexing and not transmitting, by the terminal device, the first HARQ-ACK information on the first PUSCH when the terminal device does not receive the first physical downlink channel, and the terminal device does not need to multiplex and transmit HARQ-ACK information corresponding to an SPS PDSCH on the first PUSCH, and the first DAI information indicates 4.

2. The wireless communication method of claim 1, wherein the first PUSCH is associated with a second physical downlink channel, and the method further comprises:
determining, by the terminal device, whether to multiplex and transmit second HARQ-ACK information on the first PUSCH according to a reception situation of the second physical downlink channel, wherein, the second HARQ-ACK information corresponds to the reception situation of the second physical downlink channel;
wherein the second physical downlink channel comprises:
a PDSCH transmission associated a PDCCH and a third HARQ process, wherein the third HARQ process comprises a HARQ process corresponding to the first state;
wherein the second physical downlink channel does not comprise a PDSCH transmission associated a PDCCH and a fourth HARQ process, wherein the fourth HARQ process comprises a HARQ process corresponding to the second state.

3. The wireless communication method of claim 1, wherein determining, by the terminal device, whether to multiplex and transmit the first HARQ-ACK information on the first PUSCH according to the first DAI information and the reception situation of the first physical downlink channel, further comprises:
multiplexing and transmiting, by the terminal device, the first HARQ-ACK information on the first PUSCH according to the first DAI information when a number of first physical downlink channels received by the terminal device is greater than or equal to 1, or the terminal device needs to multiplex and transmit HARQ-ACK information corresponding to an SPS PDSCH on the first PUSCH.

4. The wireless communication method of claim 1 or 3, wherein the first PUSCH is further associated with a second physical downlink channel, the first DCI further comprises second DAI information indicating a number of second physical downlink channels associated with the first PUSCH, and the method further comprises:
determining, by the terminal device, whether to multiplex and transmit second HARQ-ACK information on the first PUSCH according to the second DAI information and a reception situation of the second physical downlink channel, wherein, the second HARQ-ACK information corresponds to the reception situation of the second physical downlink channel.

5. The wireless communication method of claim 4, wherein determining, by the terminal device, whether to multiplex and transmit the second HARQ-ACK information on the first PUSCH according to the second DAI information and the reception situation of the second physical downlink channel, comprises:
multiplexing and transmitting, by the terminal device, the second HARQ-ACK information on the first PUSCH according to the second DAI information when a number of second physical downlink channels received by the terminal device is greater than or equal to 1; or
not multiplexing and not transmitting, by the terminal device, the second HARQ-ACK information on the first PUSCH when the terminal device does not receive the second physical downlink channel and the second DAI information indicates a preset value; wherein the preset value is 0 or 4.

6. The wireless communication method of claim 1 or 2, wherein determining, by the terminal device to transmit the first PUSCH, comprises:
determining, by the terminal device, to transmit the first PUSCH according to scheduling information sent by the network device, wherein the scheduling information does not comprise DCI, or the scheduling information comprises second DCI and the second DCI does not comprises DAI information.

7. The wireless communication method of claim 1, wherein determining, by the terminal device, whether to multiplex and transmit the first HARQ-ACK information on the first PUSCH according to the reception situation of the first physical downlink channel, comprises:
multiplexing and transmitting, by the terminal device, the first HARQ-ACK information on the first PUSCH when a number of first physical downlink channels received by the terminal device is greater than or equal to 1, or the terminal device needs to multiplex and transmit HARQ-ACK information corresponding to an SPS PDSCH on the first PUSCH; or
not multiplexing and not transmitting, by the terminal device, the first HARQ-ACK information on the first PUSCH when the terminal device does not receive the first physical downlink channel and the terminal device does not need to multiplex and transmit HARQ-ACK information corresponding to an SPS PDSCH on the first PUSCH.

8. The wireless communication method of claim 2, wherein determining, by the terminal device, whether to multiplex and transmit the second HARQ-ACK information on the first PUSCH according to the reception situation of the second physical downlink channel, comprises:
multiplexing and transmitting, by the terminal device, the second HARQ-ACK information on the first PUSCH when a number of second physical downlink channels received by the terminal device is greater than or equal to 1; or
not multiplexing and not transmitting, by the terminal device, the second HARQ-ACK information on the first PUSCH when the terminal device does not receive the second physical downlink channel.

9. A wireless communication method, comprising:
sending (S310), by a network device, first downlink control information, DCI, to a terminal device, wherein the first DCI is used for scheduling a transmission of a first physical uplink shared channel, PUSCH, the first DCI comprises first downlink assignment indication, DAI, information;
**characterized in that** the first DAI information is used for indicating a number of first physical downlink channels associated with the first PUSCH;
a first physical downlink channel comprises: a physical downlink shared channel, PDSCH, transmission associated with a physical downlink control channel, PDCCH, and a first hybrid automatic retransmission request, HARQ, process, wherein the first HARQ process comprises a HARQ process corresponding to a first state rather than a second state;
wherein the HARQ process corresponding to the first state comprises: a HARQ process corresponding to an enabled state; and the HARQ process corresponding to the second state comprises: a HARQ process corresponding to a disabled state;
the first DAI information is further used for the terminal device to determine whether to multiplex and transmit first Hybrid Automatic Repeat Request Acknowledgement, HARQ-ACK, information on the first PUSCH, wherein the first HARQ-ACK information corresponds to reception situation of the first physical downlink channel;
the first HARQ-ACK information is not multiplexed and transmitted on the first PUSCH by the terminal device when the first physical downlink channel is not received by the terminal device, and HARQ-ACK information corresponding to an SPS PDSCH does not need to be multiplexed and transmitted on the first PUSCH, and the first DAI information indicates 4.

10. The wireless communication method of claim 9, wherein the first DCI further comprises second DAI information indicating a number of second physical downlink channels associated with the first PUSCH;
wherein the second physical downlink channel comprises a PDSCH transmission associated with a PDCCH and a third HARQ process, wherein the third HARQ process comprises a HARQ process corresponding to the first state;
wherein the second physical downlink channel does not include a PDSCH transmission associated with a PDCCH and a fourth HARQ process, wherein the fourth HARQ process comprises a HARQ process corresponding to the second state;
wherein the terminal device is configured to feed back two HARQ-ACK sub-codebooks; or,
the terminal device is configured with a code block group, CBG, transmission; or,
the terminal device is configured with a CBG feedback; or,
the second physical downlink channel corresponds to a CBG-based HARQ-ACK feedback mode.

11. The wireless communication method of claim 9 or 10, further comprising:
sending, by the network device, first indication information to the terminal device, wherein, the first indication information indicates that uplink HARQ-ACK feedback is not performed for the HARQ process corresponding to the second state.

12. A terminal device (400), comprising a processor and a memory, wherein the memory is configured to store a computer program, and the processor is configured to call and run the computer program stored in the memory to perform the method according to any one of claims 1 to 8.

13. A network device (500) comprising a processor and a memory, wherein the memory is configured to store a computer program, and the processor is configured to call and run the computer program stored in the memory to perform the method according to any one of claims 9 to 11.

## Patentansprüche

1. Drahtloskommunikationsverfahren, umfassend:
Bestimmen, durch eine Endgerätevorrichtung, dass ein erster gemeinsam genutzter physischer Uplink-Kanal (Physical Uplink Shared Channel, PUSCH) zu übertragen ist;
Bestimmen (S320), durch die Endgerätevorrichtung, ob erste Informationen der Bestätigung mit hybrider automatischer Wiederholungsanforderung (Hybrid Automatic Repeat Request Acknowledgement, HARQ-ACK) auf dem ersten PUSCH gemäß einer Empfangssituation eines ersten physischen Downlink-Kanals zu multiplexieren und zu übertragen sind, wobei die ersten HARQ-ACK-Informationen der Empfangssituation des ersten physischen Downlink-Kanals entsprechen;
**dadurch gekennzeichnet, dass** der erste PUSCH dem ersten physischen Downlink-Kanal zugeordnet ist;
wobei der erste physische Downlink-Kanal umfasst: eine Übertragung über den gemeinsam genutzten physischen Downlink-Kanal (Physical Downlink Shared Channel, PDSCH), die einem physischen Downlink-Steuerkanal (Physical Downlink Control Channel, PDCCH) und einem ersten HARQ-Prozess zugeordnet ist, wobei der erste HARQ-Prozess einen HARQ-Prozess umfasst, der einem ersten Zustand und nicht einem zweiten Zustand entspricht;
wobei der HARQ-Prozess, der dem ersten Zustand entspricht, umfasst: einen HARQ-Prozess, der einem aktivierten Zustand entspricht; und der HARQ-Prozess, der dem zweiten Zustand entspricht, umfasst: einen HARQ-Prozess, der einem deaktivierten Zustand entspricht;
wobei das Bestimmen, durch die Endgerätevorrichtung, dass der erste PUSCH zu übertragen ist, umfasst:
Empfangen, durch die Endgerätevorrichtung, von ersten Downlink-Steuerinformationen (Downlink Control Information, DCI), die von einer Netzwerkvorrichtung gesendet werden, wobei die ersten DCI zur Planung der ersten PUSCH-Übertragung verwendet werden, die ersten DCI erste Downlink-Zuweisungsanzeige (Downlink Assignment Indication, DAI)-Informationen umfassen und die ersten DAI-Informationen dazu verwendet werden, eine Anzahl erster physischer Downlink-Kanäle anzuzeigen, die dem ersten PUSCH zugeordnet sind;
wobei das Bestimmen, durch die Endgerätevorrichtung, ob die ersten HARQ-ACK-Informationen auf dem ersten PUSCH gemäß der Empfangssituation des ersten physischen Downlink-Kanals zu multiplexieren und zu übertragen sind, umfasst:
Bestimmen, durch die Endgerätevorrichtung, ob die ersten HARQ-ACK-Informationen auf dem ersten PUSCH gemäß den ersten DAI-Informationen und der Empfangssituation des ersten physischen Downlink-Kanals zu multiplexieren und zu übertragen sind;
wobei das Bestimmen, durch die Endgerätevorrichtung, ob die ersten HARQ-ACK-Informationen auf dem ersten PUSCH gemäß den ersten DAI-Informationen und der Empfangssituation des ersten physischen Downlink-Kanals zu multiplexieren und zu übertragen sind, umfasst:
Nicht-Multiplexieren und Nicht-Übertragen, durch die Endgerätevorrichtung, der ersten HARQ-ACK-Informationen auf dem ersten PUSCH, wenn die Endgerätevorrichtung den ersten physischen Downlink-Kanal nicht empfängt und die Endgerätevorrichtung keine HARQ-ACK-Informationen multiplexieren und übertragen muss, die einem SPS-PDSCH auf dem ersten PUSCH entsprechen, und die ersten DAI-Informationen den Wert 4 angeben.

2. Drahtloskommunikationsverfahren nach Anspruch 1, wobei der erste PUSCH einem zweiten physischen Downlink-Kanal zugeordnet ist und das Verfahren ferner umfasst:
Bestimmen, durch die Endgerätevorrichtung, ob zweite HARQ-ACK-Informationen auf dem ersten PUSCH gemäß einer Empfangssituation des zweiten physischen Downlink-Kanals zu multiplexieren und zu übertragen sind, wobei die zweiten HARQ-ACK-Informationen der Empfangssituation des zweiten physischen Downlink-Kanals entsprechen;
wobei der zweite physische Downlink-Kanal umfasst:
eine PDSCH-Übertragung, die einem PDCCH und einem dritten HARQ-Prozess zugeordnet ist, wobei der dritte HARQ-Prozess einen HARQ-Prozess umfasst, der einem ersten Zustand entspricht;
wobei der zweite physische Downlink-Kanal keine PDSCH-Übertragung umfasst, die einem PDCCH und einem vierten HARQ-Prozess zugeordnet ist, wobei der vierte HARQ-Prozess einen HARQ-Prozess umfasst, der einem zweiten Zustand entspricht.

3. Drahtloskommunikationsverfahren nach Anspruch 1, wobei das Bestimmen, durch die Endgerätevorrichtung, ob die ersten HARQ-ACK-Informationen auf dem ersten PUSCH gemäß den ersten DAI-Informationen und der Empfangssituation des ersten physischen Downlink-Kanals zu multiplexieren und zu übertragen sind, ferner umfasst:
Multiplexieren und Übertragen, durch die Endgerätevorrichtung, der ersten HARQ-ACK-Informationen auf dem ersten PUSCH gemäß den ersten DAI-Informationen, wenn eine Anzahl erster physischer Downlink-Kanäle, die von der Endgerätevorrichtung empfangen werden, größer oder gleich 1 ist oder die Endgerätevorrichtung HARQ-ACK-Informationen multiplexieren und übertragen muss, die einem SPS-PDSCH auf dem ersten PUSCH entsprechen.

4. Drahtloskommunikationsverfahren nach Anspruch 1 oder 3, wobei der erste PUSCH ferner einem zweiten physischen Downlink-Kanal zugeordnet ist, die ersten DCI ferner zweite DAI-Informationen umfassen, die eine Anzahl zweiter physischer Downlink-Kanäle anzeigen, die dem ersten PUSCH zugeordnet sind, und wobei das Verfahren ferner umfasst:
Bestimmen, durch die Endgerätevorrichtung, ob zweite HARQ-ACK-Informationen auf dem ersten PUSCH gemäß den zweiten DAI-Informationen und einer Empfangssituation des zweiten physischen Downlink-Kanals zu multiplexieren und zu übertragen sind, wobei die zweiten HARQ-ACK-Informationen der Empfangssituation des zweiten physischen Downlink-Kanals entsprechen.

5. Drahtloskommunikationsverfahren nach Anspruch 4, wobei das Bestimmen, durch die Endgerätevorrichtung, ob die zweiten HARQ-ACK-Informationen auf dem ersten PUSCH gemäß den zweiten DAI-Informationen und der Empfangssituation des zweiten physischen Downlink-Kanals zu multiplexieren und zu übertragen sind, umfasst:
Multiplexieren und Übertragen, durch die Endgerätevorrichtung, der zweiten HARQ-ACK-Informationen auf dem ersten PUSCH gemäß den zweiten DAI-Informationen, wenn eine Anzahl zweiter physischer Downlink-Kanäle, die von der Endgerätevorrichtung empfangen werden, größer oder gleich 1 ist; oder
Nicht-Multiplexieren und Nicht-Übertragen, durch die Endgerätevorrichtung, der zweiten HARQ-ACK-Informationen auf dem ersten PUSCH, wenn die Endgerätevorrichtung den zweiten physischen Downlink-Kanal nicht empfängt und die zweiten DAI-Informationen einen voreingestellten Wert angeben, wobei der voreingestellte Wert 0 oder 4 beträgt.

6. Drahtloskommunikationsverfahren nach Anspruch 1 oder 2, wobei das Bestimmen, durch die Endgerätevorrichtung, dass der erste PUSCH zu übertragen ist, umfasst:
Bestimmen, durch die Endgerätevorrichtung, den ersten PUSCH gemäß von der Netzwerkvorrichtung gesendeten Planungsinformationen zu übertragen, wobei die Planungsinformationen keine DCI umfassen, oder wobei die Planungsinformationen zweite DCI umfassen und die zweiten DCI keine DAI-Informationen umfassen.

7. Drahtloskommunikationsverfahren nach Anspruch 1, wobei das Bestimmen, durch die Endgerätevorrichtung, ob die ersten HARQ-ACK-Informationen auf dem ersten PUSCH gemäß der Empfangssituation des ersten physischen Downlink-Kanals zu multiplexieren und zu übertragen sind, umfasst:
Multiplexieren und Übertragen, durch die Endgerätevorrichtung, der ersten HARQ-ACK-Informationen auf dem ersten PUSCH, wenn eine Anzahl erster physischer Downlink-Kanäle, die von der Endgerätevorrichtung empfangen werden, größer oder gleich 1 ist oder die Endgerätevorrichtung HARQ-ACK-Informationen multiplexieren und übertragen muss, die einem SPS-PDSCH auf dem ersten PUSCH entsprechen; oder
Nicht-Multiplexieren und Nicht-Übertragen, durch die Endgerätevorrichtung, der ersten HARQ-ACK-Informationen auf dem ersten PUSCH, wenn die Endgerätevorrichtung den ersten physischen Downlink-Kanal nicht empfängt und die Endgerätevorrichtung keine HARQ-ACK-Informationen multiplexieren und übertragen muss, die einem SPS-PDSCH auf dem ersten PUSCH entsprechen.

8. Drahtloskommunikationsverfahren nach Anspruch 2, wobei das Bestimmen, durch die Endgerätevorrichtung, ob die zweiten HARQ-ACK-Informationen auf dem ersten PUSCH gemäß der Empfangssituation des zweiten physischen Downlink-Kanals zu multiplexieren und zu übertragen sind, umfasst:
Multiplexieren und Übertragen, durch die Endgerätevorrichtung, der zweiten HARQ-ACK-Informationen auf dem ersten PUSCH, wenn eine Anzahl zweiter physischer Downlink-Kanäle, die von der Endgerätevorrichtung empfangen werden, größer oder gleich 1 ist; oder
Nicht-Multiplexieren und Nicht-Übertragen, durch die Endgerätevorrichtung, der zweiten HARQ-ACK-Informationen auf dem ersten PUSCH, wenn die Endgerätevorrichtung den zweiten physischen Downlink-Kanal nicht empfängt.

9. Drahtloskommunikationsverfahren, umfassend:
Senden (S310), durch eine Netzwerkvorrichtung, von ersten Downlink-Steuerinformationen (DCI) an eine Endgerätevorrichtung, wobei die ersten DCI zur Planung einer Übertragung eines ersten gemeinsam genutzten physischen Uplink-Kanals (PUSCH) verwendet werden, wobei die ersten DCI erste Downlink-Zuweisungsanzeige (DAI)-Informationen umfassen;
**dadurch gekennzeichnet, dass** die ersten DAI-Informationen dazu verwendet werden, eine Anzahl erster physischer Downlink-Kanäle anzuzeigen, die dem ersten PUSCH zugeordnet sind;
wobei ein erster physischer Downlink-Kanal umfasst: eine Übertragung über den gemeinsam genutzten physischen Downlink-Kanal (PDSCH), die einem physischen Downlink-Steuerkanal (PDCCH) und einem ersten HARQ-Prozess zugeordnet ist, wobei der erste HARQ-Prozess einen HARQ-Prozess umfasst, der einem ersten Zustand und nicht einem zweiten Zustand entspricht;
wobei der HARQ-Prozess, der dem ersten Zustand entspricht, umfasst: einen HARQ-Prozess, der einem aktivierten Zustand entspricht; und der HARQ-Prozess, der dem zweiten Zustand entspricht, umfasst: einen HARQ-Prozess, der einem deaktivierten Zustand entspricht;
wobei die ersten DAI-Informationen ferner dazu verwendet werden, dass die Endgerätevorrichtung bestimmt, ob erste Informationen der Bestätigung mit hybrider automatischer Wiederholungsanforderung (HARQ-ACK) auf dem ersten PUSCH zu multiplexieren und zu übertragen sind, wobei die ersten HARQ-ACK-Informationen einer Empfangssituation des ersten physischen Downlink-Kanals entsprechen;
wobei die ersten HARQ-ACK-Informationen nicht durch die Endgerätevorrichtung auf dem ersten PUSCH multiplexiert und übertragen werden, wenn der erste physische Downlink-Kanal von der Endgerätevorrichtung nicht empfangen wird und HARQ-ACK-Informationen, die einem SPS-PDSCH entsprechen, nicht auf dem ersten PUSCH multiplexiert und übertragen werden müssen, und die ersten DAI-Informationen den Wert 4 angeben.

10. Drahtloskommunikationsverfahren nach Anspruch 9, wobei die ersten DCI ferner zweite DAI-Informationen umfassen, die eine Anzahl zweiter physischer Downlink-Kanäle anzeigen, die dem ersten PUSCH zugeordnet sind;
wobei der zweite physische Downlink-Kanal eine PDSCH-Übertragung umfasst, die einem PDCCH und einem dritten HARQ-Prozess zugeordnet ist, wobei der dritte HARQ-Prozess einen HARQ-Prozess umfasst, der einem ersten Zustand entspricht;
wobei der zweite physische Downlink-Kanal keine PDSCH-Übertragung beinhaltet, die einem PDCCH und einem vierten HARQ-Prozess zugeordnet ist, wobei der vierte HARQ-Prozess einen HARQ-Prozess umfasst, der einem zweiten Zustand entspricht;
wobei die Endgerätevorrichtung dazu konfiguriert ist, zwei HARQ-ACK-Sub-Codebücher zurückzumelden; oder
die Endgerätevorrichtung mit einer Codeblockgruppen (Code Block Group, CBG)-Übertragung konfiguriert ist; oder
die Endgerätevorrichtung mit einer CBG-Rückmeldung konfiguriert ist; oder
der zweite physische Downlink-Kanal einem CBGbasierten HARQ-ACK-Rückmeldemodus entspricht.

11. Drahtloskommunikationsverfahren nach Anspruch 9 oder 10, ferner umfassend:
Senden, durch die Netzwerkvorrichtung, von ersten Anzeigeinformationen an die Endgerätevorrichtung, wobei die ersten Anzeigeinformationen anzeigen, dass für den HARQ-Prozess, der dem zweiten Zustand entspricht, keine Uplink-HARQ-ACK-Rückmeldung durchgeführt wird.

12. Endgerätevorrichtung (400), umfassend einen Prozessor und einen Speicher, wobei der Speicher dazu konfiguriert ist, ein Computerprogramm zu speichern, und der Prozessor dazu konfiguriert ist, das im Speicher gespeicherte Computerprogramm aufzurufen und auszuführen, um das Verfahren nach einem der Ansprüche 1 bis 8 durchzuführen.

13. Netzwerkvorrichtung (500), umfassend einen Prozessor und einen Speicher, wobei der Speicher dazu konfiguriert ist, ein Computerprogramm zu speichern, und der Prozessor dazu konfiguriert ist, das im Speicher gespeicherte Computerprogramm aufzurufen und auszuführen, um das Verfahren nach einem der Ansprüche 9 bis 11 durchzuführen.

## Revendications

1. Procédé de communication sans fil, comprenant :
la détermination, par un dispositif de terminal, de transmettre un premier canal partagé de liaison montante physique, « Physical Uplink Shared CHannel » PUSCH ;
la détermination (S320), par le dispositif de terminal, du fait qu'il faut ou non multiplexer et transmettre des premières informations d'accusé de réception de demande de répétition automatique hybride, « Hybrid Automatic Repeat reQuest ACKnowledgement » HARQ-ACK, sur le premier PUSCH selon une situation de réception d'un premier canal de liaison descendante physique, dans lequel, les premières informations de HARQ-ACK correspondent à la situation de réception du premier canal de liaison descendante physique ;
**caractérisé en ce que** le premier PUSCH est associé au premier canal de liaison descendante physique ;
le premier canal de liaison descendante physique comprend : une transmission de canal partagé de liaison descendante physique, « Physical Downlink Shared CHannel » PDSCH, associée à un canal de commande de liaison descendante physique, « Physical Downlink Control CHannel » PDCCH, et un premier processus de demande de retransmission automatique hybride, « Hybrid Automatic Retransmission reQuest » HARQ, dans lequel le premier processus de HARQ comprend un processus de HARQ correspondant à un premier état plutôt qu'un second état ;
dans lequel le processus de HARQ correspondant au premier état comprend : un processus de HARQ correspondant à un état activé ; et le processus de HARQ correspondant au second état comprend : un processus de HARQ correspondant à un état désactivé ;
dans lequel la détermination, par le dispositif de terminal, de transmettre le premier PUSCH comprend :
la réception, par le dispositif de terminal, de premières informations de commande de liaison descendante, « Downlink Control Information » DCI, envoyées par un dispositif de réseau, dans lequel les premières DCI sont utilisées pour ordonnancer la première transmission de PUSCH, les premières DCI comprennent des premières informations d'indication d'attribution de liaison descendante, « Downlink Assignment Indication » DAI, et les premières informations de DAI sont utilisées pour indiquer un nombre de premiers canaux de liaison descendante physique associés au premier PUSCH ;
la détermination, par le dispositif de terminal, du fait qu'il faut ou non multiplexer et transmettre les premières informations de HARQ-ACK sur le premier PUSCH selon la situation de réception du premier canal de liaison descendante physique comprend :
la détermination, par le dispositif de terminal, du fait qu'il faut ou non multiplexer et transmettre les premières informations de HARQ-ACK sur le premier PUSCH selon les premières informations de DAI et la situation de réception du premier canal de liaison descendante physique ;
la détermination, par le dispositif de terminal, du fait qu'il faut ou non multiplexer et transmettre les premières informations de HARQ-ACK sur le premier PUSCH selon les premières informations de DAI et la situation de réception du premier canal de liaison descendante physique, comprend :
le non-multiplexage et la non-transmission, par le dispositif de terminal, des premières informations de HARQ-ACK sur le premier PUSCH lorsque le dispositif de terminal ne reçoit pas le premier canal de liaison descendante physique, et le dispositif de terminal n'a pas besoin de multiplexer et de transmettre d'informations HARQ-ACK correspondant à un PDSCH de SPS sur le premier PUSCH, et les premières informations de DAI indiquent 4.

2. Procédé de communication sans fil de la revendication 1, dans lequel le premier PUSCH est associé à un second canal de liaison descendante physique, et le procédé comprend en outre :
la détermination, par le dispositif de terminal, du fait qu'il faut ou non multiplexer et transmettre des secondes informations de HARQ-ACK sur le premier PUSCH selon une situation de réception du second canal de liaison descendante physique, dans lequel, les secondes informations de HARQ-ACK correspondent à la situation de réception du second canal de liaison descendante physique ;
dans lequel le second canal de liaison descendante physique comprend :
une transmission de PDSCH associée à un PDCCH et à un troisième processus de HARQ, dans lequel le troisième processus de HARQ comprend un processus de HARQ correspondant au premier état ;
dans lequel le second canal de liaison descendante physique ne comprend pas de transmission de PDSCH associée à un PDCCH et à un quatrième processus de HARQ, dans lequel le quatrième processus de HARQ comprend un processus de HARQ correspondant au second état.

3. Procédé de communication sans fil de la revendication 1, dans lequel la détermination, par le dispositif de terminal, du fait qu'il faut ou non multiplexer et transmettre les premières informations de HARQ-ACK sur le premier PUSCH selon les premières informations de DAI et la situation de réception du premier canal de liaison descendante physique comprend en outre :
le multiplexage et la transmission, par le dispositif de terminal, des premières informations de HARQ-ACK sur le premier PUSCH selon les premières informations de DAI lorsqu'un nombre de premiers canaux de liaison descendante physique reçus par le dispositif de terminal est supérieur ou égal à 1, ou le dispositif de terminal doit multiplexer et transmettre des informations HARQ-ACK correspondant à un PDSCH de SPS sur le premier PUSCH.

4. Procédé de communication sans fil de la revendication 1 ou 3, dans lequel le premier PUSCH est en outre associé à un second canal de liaison descendante physique, les premières DCI comprennent en outre des secondes informations de DAI indiquant un nombre de seconds canaux de liaison descendante physique associés au premier PUSCH, et le procédé comprend en outre :
la détermination, par le dispositif de terminal, du fait qu'il faut ou non multiplexer et transmettre secondes informations de HARQ-ACK sur le premier PUSCH selon les secondes informations de DAI et une situation de réception du second canal de liaison descendante physique, dans lequel, les secondes informations de HARQ-ACK correspondent à la situation de réception du second canal de liaison descendante physique.

5. Procédé de communication sans fil de la revendication 4, dans lequel la détermination, par le dispositif de terminal, du fait qu'il faut ou non multiplexer et transmettre les secondes informations de HARQ-ACK sur le premier PUSCH selon les secondes informations de DAI et la situation de réception du second canal de liaison descendante physique comprend :
le multiplexage et la transmission, par le dispositif de terminal, des secondes informations de HARQ-ACK sur le premier PUSCH selon les secondes informations de DAI lorsqu'un nombre de seconds canaux de liaison descendante physique reçus par le dispositif de terminal est supérieur ou égal à 1 ; ou
le non-multiplexage et la non-transmission, par le dispositif de terminal, des secondes informations de HARQ-ACK sur le premier PUSCH lorsque le dispositif de terminal ne reçoit pas le second canal de liaison descendante physique et les secondes informations de DAI indiquent une valeur prédéfinie ; dans lequel la valeur prédéfinie est 0 ou 4.

6. Procédé de communication sans fil de la revendication 1 ou 2, dans lequel la détermination, par le dispositif de terminal, de transmettre le premier PUSCH comprend :
la détermination, par le dispositif de terminal, de transmettre le premier PUSCH selon des informations d'ordonnancement envoyées par le dispositif de réseau, dans lequel les informations d'ordonnancement ne comprennent pas de DCI, ou les informations d'ordonnancement comprennent des secondes DCI et les secondes DCI ne comprennent pas d'informations de DAI.

7. Procédé de communication sans fil de la revendication 1, dans lequel la détermination, par le dispositif de terminal, du fait qu'il faut ou non multiplexer et transmettre les premières informations de HARQ-ACK sur le premier PUSCH selon la situation de réception du premier canal de liaison descendante physique comprend :
le multiplexage et la transmission, par le dispositif de terminal, des premières informations de HARQ-ACK sur le premier PUSCH lorsqu'un nombre de premiers canaux de liaison descendante physique reçus par le dispositif de terminal est supérieur ou égal à 1, ou le dispositif de terminal doit multiplexer et transmettre des informations HARQ-ACK correspondant à un PDSCH de SPS sur le premier PUSCH ; ou
le non-multiplexage et la non-transmission, par le dispositif de terminal, des premières informations de HARQ-ACK sur le premier PUSCH lorsque le dispositif de terminal ne reçoit pas le premier canal de liaison descendante physique et le dispositif de terminal n'a pas besoin de multiplexer et de transmettre d'informations HARQ-ACK correspondant à un PDSCH de SPS sur le premier PUSCH.

8. Procédé de communication sans fil de la revendication 2, dans lequel la détermination, par le dispositif de terminal, du fait qu'il faut ou non multiplexer et transmettre les secondes informations de HARQ-ACK sur le premier PUSCH selon la situation de réception du second canal de liaison descendante physique comprend :
le multiplexage et la transmission, par le dispositif de terminal, des secondes informations de HARQ-ACK sur le premier PUSCH lorsqu'un nombre de seconds canaux de liaison descendante physique reçus par le dispositif de terminal est supérieur ou égal à 1 ; ou
le non-multiplexage et la non-transmission, par le dispositif de terminal, des secondes informations de HARQ-ACK sur le premier PUSCH lorsque le dispositif de terminal ne reçoit pas le second canal de liaison descendante physique.

9. Procédé de communication sans fil, comprenant :
l'envoi (S310), par un dispositif de réseau, de premières informations de commande de liaison descendante, « Downlink Control Information » DCI, à un dispositif de terminal, dans lequel les premières DCI sont utilisées pour ordonnancer une transmission d'un premier canal partagé de liaison montante physique, « Physical Uplink Shared CHannel » PUSCH, les premières DCI comprennent des premières informations d'indication d'attribution de liaison descendante, « Downlink Assignment Indication » DAI ;
**caractérisé en ce que** les premières informations de DAI sont utilisées pour indiquer un nombre de premiers canaux de liaison descendante physique associés au premier PUSCH ;
un premier canal de liaison descendante physique comprend : une transmission de canal partagé de liaison descendante physique, « Physical Downlink Shared CHannel » PDSCH, associée à un canal de commande de liaison descendante physique, « Physical Downlink Control CHannel » PDCCH, et un premier processus de demande de retransmission automatique hybride, « Hybrid Automatic Retransmission reQuest » HARQ, dans lequel le premier processus de HARQ comprend un processus de HARQ correspondant à un premier état plutôt qu'un second état ;
dans lequel le processus de HARQ correspondant au premier état comprend : un processus de HARQ correspondant à un état activé ; et le processus de HARQ correspondant au second état comprend : un processus de HARQ correspondant à un état désactivé ;
les premières informations de DAI sont en outre utilisées pour que le dispositif de terminal détermine le fait qu'il faut ou non multiplexer et transmettre premières informations d'accusé de réception de demande de répétition automatique hybride, « Hybrid Automatic Repeat ReQuest ACKnowledgement » HARQ-ACK, sur le premier PUSCH, dans lequel les premières informations de HARQ-ACK correspondent à un situation de réception du premier canal de liaison descendante physique ;
les premières informations de HARQ-ACK ne sont pas multiplexées et transmises sur le premier PUSCH par le dispositif de terminal lorsque le premier canal de liaison descendante physique n'est pas reçu par le dispositif de terminal, et des informations de HARQ-ACK correspondant à un PDSCH de SPS n'ont pas besoin d'être multiplexées et transmises sur le premier PUSCH, et les premières informations de DAI indiquent 4.

10. Procédé de communication sans fil de la revendication 9, dans lequel les premières DCI comprennent en outre des secondes informations de DAI indiquant un nombre de seconds canaux de liaison descendante physique associés au premier PUSCH ;
dans lequel le second canal de liaison descendante physique comprend une transmission de PDSCH associée à un PDCCH et à un troisième processus de HARQ, dans lequel le troisième processus de HARQ comprend un processus de HARQ correspondant au premier état ;
dans lequel le second canal de liaison descendante physique n'inclut pas de transmission de PDSCH associée à un PDCCH et à un quatrième processus de HARQ, dans lequel le quatrième processus de HARQ comprend un processus de HARQ correspondant au second état ;
dans lequel le dispositif de terminal est configuré pour fournir en retour deux sous-livres de codes de HARQ-ACK ; ou,
le dispositif de terminal est configuré avec une transmission de groupe de blocs de codes, « Code Block Group », CBG ; ou,
le dispositif de terminal est configuré avec un retour de CBG ; ou,
le second canal de liaison descendante physique correspondent à un mode de retour de HARQ-ACK à base de CBG.

11. Procédé de communication sans fil de la revendication 9 ou 10, comprenant en outre :
l'envoi, par le dispositif de réseau, de premières informations d'indication au dispositif de terminal, dans lequel, les premières informations d'indication indiquent que le retour de HARQ-ACK de liaison montante n'est pas réalisé pour le processus de HARQ correspondant au second état.

12. Dispositif de terminal (400), comprenant un processeur et une mémoire, dans lequel la mémoire est configurée pour stocker un programme informatique, et le processeur est configuré pour appeler et exécuter le programme informatique stocké dans la mémoire pour réaliser le procédé selon l'une quelconque des revendications 1 à 8.

13. Dispositif de réseau (500), comprenant un processeur et une mémoire, dans lequel la mémoire est configurée pour stocker un programme informatique, et le processeur est configuré pour appeler et exécuter le programme informatique stocké dans la mémoire pour réaliser le - procédé selon l'une quelconque des revendications 9 à 11.
